# EUROPEAN PATENT APPLICATION

(11) **EP 4 783 665 A1**
(43) Date of publication of application: **29.07.2026**
(21) Application number: 24870667.3
(22) Date of filing: 23.09.2024
(51) Int. Cl.: H04W 36/00

(54) **HANDOVER METHOD AND RELATED APPARATUS**

(30) Priority: 28.09.2023 CN 202311295095
(71) Applicant: HUAWEI TECHNOLOGIES CO., LTD., Shenzhen 518129 (CN)
(72) Inventor: ZHANG, Haisen, Shenzhen, Guangdong 518129 (CN); WANG, Yan, Shenzhen, Guangdong 518129 (CN); LI, Bingzhao, Shenzhen, Guangdong 518129 (CN); CHEN, Lei, Shenzhen, Guangdong 518129 (CN); XU, Bin, Shenzhen, Guangdong 518129 (CN)
(74) Representative: Gill Jennings & Every LLP
(86) International application number: PCT/CN2024/120498
(87) International publication number: WO 2025/067123

(57) **Abstract**

This application provides a handover method and a related apparatus, so that an access network device can release a buffer in time, to improve resource utilization. The method includes: A first access network device sends a first handover request message to a second access network device, where the first handover request message includes a sequence number of a last first data packet in at least one first data packet sent by the first access network device to a terminal. The first access network device sends at least one second data packet to the terminal. The first access network device sends a second sequence number to the second access network device, where the second sequence number is a sequence number of a last second data packet in the at least one second data packet sent by the first access network device to the terminal, and the at least one first data packet and the at least one second data packet belong to a same MBS session. The second access network device deletes, based on the received second sequence number, a data packet that is in buffered data packets of the MBS session and that is identified by a sequence number less than or equal to the second sequence number.

## Description

This application claims priority to Chinese Patent Application No. 202311295095.X, filed with the China National Intellectual Property Administration on September 28, 2023 and entitled "HANDOVER METHOD AND RELATED APPARATUS", which is incorporated herein by reference in its entirety.

### TECHNICAL FIELD

This application relates to the field of communication technologies, and in particular, to a handover method and a related apparatus.

### BACKGROUND

In a handover procedure, deterioration of a wireless environment between a terminal and an access network device may cause a measurement report reported by the terminal to fail to reach the access network device, or cause a handover command delivered by the access network device after reception of the measurement report to fail to reach the terminal. This leads to a handover failure, necessitating the terminal re-initiating radio resource control (radio resource control, RRC) re-establishment.

To reduce a probability of a handover failure in a unicast service, conditional handover (conditional handover, CHO) is proposed. The CHO allows the source access network device to deliver a handover command to the terminal in advance of deterioration of the wireless environment between the terminal and the access network device, so that the terminal can know in advance how to access a target access network device. After finding, from a plurality of candidate target access network devices, a candidate target access network device that satisfies a handover trigger condition, the terminal can autonomously initiate handover. This can significantly increase a handover success rate.

Currently, with increasing demands for lossless handover in a multicast and broadcast service (multicast and broadcast service, MBS), the CHO can be applied to handover including an MBS session, to ensure a handover success rate of a terminal receiving the MBS session. When the CHO is applied to the handover including the MBS session, after the source access network device determines to perform conditional handover, the source access network device still forwards a data packet of the MBS to the terminal device for a period of time, and data forwarding between the source access network device and the candidate target access network device may also continue. However, a large quantity of forwarded data packets of the MBS may be accumulated on the candidate target access network device side, leading to overload of the plurality of candidate target access network devices and excessive resources used for buffering data.

### SUMMARY

This application provides a handover method and a related apparatus, so that an access network device can release a buffer in time, to improve resource utilization.

According to a first aspect, this application provides a handover method. The method may be applied to a first access network device. For example, the method may be performed by the first access network device, or may be performed by a component (for example, a chip or a chip system) configured in the first access network device, or may be implemented by a logical module or software that can implement all or some functions of the first access network device. This is not limited in this application.

For example, the method includes: sending a first handover request message to a second access network device, where the first handover request message is used to request to hand over a terminal from the first access network device to the second access network device, the first handover request message includes a first sequence number, and the first sequence number is a sequence number of a last first data packet in at least one first data packet sent by the first access network device to the terminal; sending at least one second data packet to the terminal; and sending a second sequence number to the second access network device, where the second sequence number is a sequence number of a last second data packet in the at least one second data packet sent by the first access network device to the terminal, and the second sequence number is greater than the first sequence number.

In this application, a data packet that is of an MBS session and that is sent by the first access network device to the first terminal before the first access network device sends the first handover request message to the second access network device is referred to as a first data packet, a data packet that is of an MBS session and that is sent by the first access network device after the first access network device sends the first handover request and before the first terminal accesses the second target access network device is referred to as a second data packet, and the at least one first data packet and the at least one second data packet belong to the same MBS session.

The second sequence number is used by the second access network device to delete a buffered data packet of the MBS session.

The first handover request message is a handover request message sent by the first access network device to a plurality of target access network devices for the first time after the first access network device determines to perform conditional handover.

In this application, after sending the first sequence number to the second access network device, the first access network device may further send the second sequence number to the second access network device. The first sequence number and the second sequence number respectively indicate last data packets of the MBS session that are sent by the first access network device to the terminal in different time periods, and the second sequence number is greater than the first sequence number. In this case, after receiving the second sequence number, the second access network device may delete a data packet that is buffered on the second access network device and that corresponds to a sequence number less than the second sequence number. In comparison with a manner in which the second access network device deletes, based only on the first sequence number, a data packet buffered on the second access network device, this allows the first access network device to release a buffer in time, to effectively improve resource utilization, and this can also prevent the second access network device from sending a repeated data packet of the MBS session to the terminal after the terminal accesses the second access network device.

With reference to the first aspect, in some implementations of the first aspect, before sending the first handover request to the second access network device, the method further includes: determining to perform conditional handover.

With reference to the first aspect, in some implementations of the first aspect, after sending the first handover request message to the second access network device, the method further includes: receiving a handover response message from the second access network device, where the handover response message includes a first initial value of a first variable, and the first variable indicates an identifier value of a 1^{st} (packet data convergence protocol, PDCP) service data unit (service data unit, SDU) that is in a receive window and that is not delivered to an upper layer; and sending the first initial value of the first variable to the terminal.

The initial value of the first variable is a latest value of RX_DELIV on the second access network device side when the second access network device sends the handover response message. When the second access network device transparently transmits the first initial value of the first variable to the first terminal via the first access network device, the first terminal may use the first initial value as an initial value of RX_DELIV on the first terminal side when accessing the second access network device.

With reference to the first aspect, in some implementations of the first aspect, the method further includes: receiving a second initial value from the second access network device, where the second initial value is greater than the first initial value; and sending the second initial value to the terminal.

The second initial value is a latest value of the first variable on the second access network device side when the second access network device determines to send the second initial value of the first variable.

According to the method, when the first initial value of the first variable expires, the second initial value can be updated to the terminal in time. In this way, after accessing the second access network device, the terminal can accurately receive a data packet of the MBS session based on the second initial value of the first variable, to prevent the terminal from receiving a disordered data packet.

With reference to the first aspect, in some implementations of the first aspect, the method further includes: determining whether a quantity of the at least one second data packet is greater than a preset value; when the quantity of the at least one second data packet is greater than the preset value, sending first information to the second access network device, where the first information is used to request a second initial value of the first variable, and the second initial value is greater than the first initial value; receiving the second initial value from the second access network device; and sending the second initial value to the terminal.

The second initial value is a latest value of the first variable on the second access network device side when the second access network device receives the first information.

For example, the preset value is a size of the receive window, or the preset value and the size of the receive window satisfy a preset relationship.

For example, the preset relationship is as follows: Preset value=*k*×Size of the receive window, where k is greater than 0 and less than or equal to 1, N indicates the size of the receive window, N satisfies: N=2^{*p-*1}, and P indicates a quantity of bits identifying the first sequence number. For example, if the first sequence number is represented by using 12 bits, P is equal to 12.

According to a second aspect, this application provides a handover method. The method may be applied to a second access network device. For example, the method may be performed by the first access network device, or may be performed by a component (for example, a chip or a chip system) configured in the second access network device, or may be implemented by a logical module or software that can implement all or some functions of the second access network device. This is not limited in this application.

For example, the method includes: receiving a first handover request message from a first access network device, where the first handover request message is used to request to hand over a terminal from the first access network device to the second access network device, the first handover request message includes a first sequence number, and the first sequence number is a sequence number of a last first data packet in at least one data packet sent by the first access network device to the terminal; receiving a second sequence number from the first access network device, where the second sequence number is a sequence number of a last second data packet in at least one second data packet sent by the first access network device to the terminal, and the second sequence number is greater than the first sequence number; and deleting a data packet that is in buffered data packets of an MBS session and that is identified by each sequence number less than or equal to the second sequence number.

The at least one first data packet and the at least one second data packet belong to a same MBS session. For descriptions of the first data packet and the second data packet, refer to the descriptions of the first aspect. Details are not described herein again.

In this application, after receiving the first sequence number from the first access network device, the second access network device may further receive the second sequence number. The first sequence number and the second sequence number respectively indicate last data packets of the MBS session that are sent by the first access network device to the terminal in different time periods, and the second sequence number is greater than the first sequence number. In this case, after receiving the second sequence number, the second access network device may delete a data packet that is buffered on the second access network device and that corresponds to a sequence number less than the second sequence number. In comparison with a manner in which the second access network device deletes, based only on the first sequence number, a data packet buffered on the second access network device, this can effectively reduce resources used by the first access network device side for buffering data packets of the MBS session, and this can also prevent the second access network device from sending a repeated data packet of the MBS session to the terminal after the terminal accesses the second access network device.

With reference to the second aspect, in some implementations of the second aspect, the first handover request is sent after the first access network device determines to perform conditional handover.

With reference to the second aspect, in some implementations of the second aspect, after receiving the first handover request message from the first access network device, the method further includes: sending a handover response message to the first access network device, where the handover response message includes a first initial value of a first variable, and the first variable indicates an identifier value of a 1^{st} PDCP SDU that is in a receive window and that is not delivered to an upper layer.

For descriptions of the first initial value, refer to the first aspect. Details are not described herein again.

With reference to the second aspect, in some implementations of the second aspect, the method further includes: receiving first information from the first access network device, where the first information is used to request a second initial value of the first variable, and the second initial value is greater than the first initial value; and sending the second initial value to the first access network device.

The second initial value is a latest value of the first variable on the second access network device side when the second access network device receives the first information.

With reference to the second aspect, in some implementations of the second aspect, the method further includes: after the terminal accesses the second access network device, sending a second initial value to the terminal, where the second initial value is greater than the first initial value.

Optionally, the second initial value may be carried in an RRC reconfiguration message.

It may be understood that, after the second access network device sends a handover success message to the first access network device, it is considered that the terminal is handed over from the first access network device to the second access network device. In other words, the terminal accesses the second access network. Otherwise, it is considered that the terminal does not access the second access network device.

With reference to the second aspect, in some implementations of the second aspect, the method further includes: before the terminal accesses the second access network device, sending a second initial value to the first access network device, where the second initial value is greater than the first initial value.

The second initial value is a reference value of the first variable on the second access network device side when the second access network device determines to send the second initial value of the first variable. A difference between the reference value and a latest value of the first variable on the second access network device side is less than or equal to 2^{*p*-1}, and the reference value is less than or equal to the latest value. P indicates a quantity of bits identifying the first sequence number. For example, if the first sequence number is represented by using 12 bits, P is equal to 12.

With reference to the second aspect, in some implementations of the second aspect, the method further includes: determining that a quantity of data packets of the MBS session that are sent by the second access network device is greater than a preset value.

For descriptions of the preset value, refer to the first aspect. Details are not described herein again.

With reference to the second aspect, in some implementations of the second aspect, the second sequence number is carried in a second handover request message, the second handover request message is used to request to hand over the terminal from the first access network device to the second access network device, and the second handover request message indicates the second access network device not to update an RRC configuration.

Alternatively, the second handover request message indicates the second access network device to update only MBS radio bearer (radio bearer, MRB) progress.

With reference to the second aspect, in some implementations of the second aspect, the second sequence number is carried in early status transfer (early status transfer) signaling or MBS early status transfer signaling.

According to a third aspect, this application provides a handover method. The method may be applied to a second access network device. For example, the method may be performed by the second access network device, or may be performed by a component (for example, a chip or a chip system) configured in the second access network device, or may be implemented by a logical module or software that can implement all or some functions of the second access network device. This is not limited in this application.

For example, the method includes: receiving a third handover request message from a first access network device, where the third handover request message is used to request to hand over a first terminal to the second access network device; sending a handover response message to the first access network device, where the handover response message includes a first initial value of a first variable, and the first variable indicates an identifier value of a 1^{st} PDCP SDU that is in a receive window and that is not delivered to an upper layer; and sending a second initial value of the first variable to the first terminal.

The handover response message is a request acknowledgment of the second access network device for a first handover request message.

For example, the second access network device may directly send the second initial value of the first variable to the first terminal after the first terminal accesses the second access network device; or the second access network device may send the second initial value of the first variable to the first terminal via the first access network device before the first terminal accesses the second access network device.

In this application, after sending the initial value of the first variable to the first terminal, the second access network device may send the second initial value of the first variable to the first terminal, so that the first terminal updates the initial value of the first variable. In this way, after accessing the second access network device, the first terminal can receive a data packet of an MBS session from the second access network device based on the updated second initial value, to effectively eliminate a possibility that the terminal receives a disordered data packet.

According to a fourth aspect, this application provides a handover method. The method may be applied to a first access network device. For example, the method may be performed by the first access network device, or may be performed by a component (for example, a chip or a chip system) configured in the first access network device, or may be implemented by a logical module or software that can implement all or some functions of the first access network device. This is not limited in this application.

For example, the method includes: sending a third handover request message to a second access network device, where the third handover request message is used to request to hand over a first terminal to the second access network device; receiving a handover response message from the second access network device, where the handover response message includes a first initial value of a first variable, and the first variable indicates an identifier value of a 1^{st} PDCP SDU that is in a receive window and that is not delivered to an upper layer; receiving a second initial value from the second access network device, where the second initial value is greater than the first initial value; and sending the second initial value to the terminal.

In this application, after sending the initial value of the first variable to the first terminal, the second access network device may send the second initial value of the first variable to the first terminal, so that the first terminal updates the initial value of the first variable. In this way, after accessing the second access network device, the first terminal can receive a data packet of an MBS session from the second access network device based on the updated second initial value, to effectively eliminate a possibility that the terminal receives a disordered data packet. According to a fifth aspect, this application provides a communication apparatus, including a module or a unit configured to implement the method according to any one of the foregoing aspects and any possible implementation of any one of the foregoing aspects. It should be understood that each module or unit may implement a corresponding function by executing a computer program.

According to a fifth aspect, this application provides a communication apparatus, including a processor. The processor is configured to perform the method according to any one of the foregoing aspects and any possible implementation of any one of the foregoing aspects.

The apparatus may further include a memory configured to store instructions and data. The memory is coupled to the processor. When the processor executes the instructions stored in the memory, the method described in the foregoing aspects may be implemented.

The apparatus may further include a communication interface. The communication interface is used by the apparatus to communicate with another device. For example, the communication interface may be a transceiver, a circuit, a bus, a module, or another type of communication interface.

According to a sixth aspect, this application provides a chip system. The chip system includes at least one processor, configured to support implementation of functions in any one of the foregoing aspects and any possible implementation of any one of the foregoing aspects, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a seventh aspect, this application provides a computer-readable storage medium, including a computer program. When the computer program is run on a computer, the computer is enabled to implement the method according to the first aspect and any one of the possible implementations of the first aspect.

According to an eighth aspect, this application provides a computer program product. The computer program product includes a computer program (which may also be referred to as code or instructions). When the computer program is run, a computer is enabled to perform the method according to the first aspect and any one of the foregoing aspects and any possible implementation of any one of the foregoing aspects.

According to a ninth aspect, this application provides a communication system, including the foregoing first access network device and the foregoing second access network device.

It should be understood that technical solutions of the fifth aspect to the ninth aspect of this application correspond to technical solutions of the first aspect to the fourth aspect of this application, and beneficial effects achieved in the aspects and corresponding feasible implementations are similar. Details are not described again.

### BRIEF DESCRIPTION OF DRAWINGS

FIG. 1 is a diagram of an architecture of a communication system to which an embodiment of this application is applicable;
FIG. 2 is a diagram of a transmission process of an MBS;
FIG. 3 is a diagram of a transmission architecture of a multicast service;
FIG. 4 is a schematic flowchart of Xn interface-based lossless handover according to an embodiment of this application;
FIG. 5 is a schematic flowchart of N2 interface-based lossless handover according to an embodiment of this application;
FIG. 6 is a schematic flowchart of a conditional handover method according to an embodiment of this application;
FIG. 7 to FIG. 11A and FIG. 11B are schematic flowcharts of a handover method according to embodiments of this application;
FIG. 12 and FIG. 13 are block diagrams of apparatuses according to embodiments of this application; and
FIG. 14 is a diagram of a structure of a radio access network device according to an embodiment of this application.

### DESCRIPTION OF EMBODIMENTS

The following describes technical solutions of this application with reference to accompanying drawings.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, a "first access network device" and a "second access network device" are merely different devices, and a quantity or a priority relationship of devices is not limited.

Second, "sending" and "receiving" in embodiments of this application indicate signal transfer directions. For example, "sending at least one second data packet to a terminal" may be understood as that a target end of the second data packet is the terminal, and may include direct sending through an air interface, or include indirect sending through an air interface by another unit or module. "Receiving a second initial value from a second access network device" may be understood as that a source end of the second initial value is the second access network device, and may include direct receiving from the second access network device through an air interface, or may include indirect receiving from the second access network device through an air interface from another unit or module. "Sending" may also be understood as "outputting" of a chip interface, and "receiving" may also be understood as "inputting" of the chip interface.

In other words, sending and receiving may be performed between devices, for example, between a first access network device and a terminal; or may be performed in a device, for example, between components, modules, chips, software modules, or hardware modules in the device through a bus, a cable, or an interface.

It may be understood that, before information is sent from a source end to a target end, necessary processing such as encoding and modulation may be performed, and after the target end receives the information from the source end, corresponding processing such as decoding and demodulation may also be performed, to interpret valid information from the source end. Similar descriptions in this application may be understood similarly, and details are not described again.

Third, in embodiments of this application, "at least one" means one or more, and "a plurality of' means two or more. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Fourth, in embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application.

It may be understood that, for a sender of the indication information, the indication information may indicate to-be-indicated information, and for a receiver of the indication information, the indication information may be used to determine to-be-indicated information.

Fifth, tables in embodiments of this application are merely examples. Values of information in the tables are merely examples, and other values may be configured. This is not limited in this application. The tables do not constitute a limitation on the protection scope of this application. For example, appropriate transformation or adjustment, such as splitting or combination, may be performed based on the foregoing tables. For another example, names of parameters shown in titles of the tables may alternatively be other names that can be understood by communication apparatuses, and values or representation manners of the parameters may alternatively be other values or representation manners that can be understood by the communication apparatuses. For still another example, during implementation of the foregoing tables, another data structure, such as an array, a queue, a container, a stack, a linear table, a pointer, a linked list, a tree, a graph, a structure, a class, a pile, or a hash table, may alternatively be used.

Sixth, in embodiments of this application, descriptions such as "when...", "in a case of ...", "assuming that", and "if" all mean that a device (for example, an access network device or a terminal) performs corresponding processing in an objective case, are not intended to limit time, do not require a device (for example, a network device or a terminal) to necessarily perform a determining action during implementation, and do not mean another limitation.

Seventh, predefinition in this application may be understood as definition, predefinition, storage, pre-storage, pre-negotiation, pre-configuration, solidifying, or pre-burning.

Eighth, storage in this application may mean storage in one or more memories. The one or more storages may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

The technical solutions provided in this application may be applied to various communication systems, such as a long term evolution (long term evolution, LTE) system, an LTE frequency division duplex (frequency division duplex, FDD) system, LTE time division duplex (time division duplex, TDD), a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a wireless network. The radio access network device may be a node in a radio access network, briefly referred to as a RAN node.

In a possible scenario, the RAN node may be a base station (base station, BS), an evolved NodeB (evolved NodeB, eNodeB), a transmission reception point (transmission reception point, TRP), a home evolved NodeB (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation base station in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an internet of things (internet of things, IoT) communication system, or the like. Alternatively, the RAN node may be a RAN node in a non-terrestrial network (non-terrestrial network, NTN). In other words, the RAN node may be deployed on a high-altitude platform or a satellite. The RAN node may be a macro base station, may be a micro base station or an indoor base station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any one of the CU (or the CU-CP or the CU-UP), the DU, and the RU may be implemented by using a software module, a hardware module, or a combination of a software module and a hardware module. In other words, the radio access network device in this application may be a virtualized device, for example, implemented by using general-purpose hardware and an instantiated virtualization function, or by using dedicated hardware and an instantiated virtualization function. The general-purpose hardware may be a server, for example, a cloud server. A name of the radio access network device in a future evolved communication system is not limited, and the radio access network device may also be referred to as a network device or a core network device.

The terminal in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal may alternatively be a terminal in an IoT system. IoT is an important part of future development of information technology. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal may alternatively include a sensor such as a smart printer, a train detector, or a gas station. Main functions include collecting data (some terminals), receiving control information and downlink data from a network device, sending an electromagnetic wave, and transmitting uplink data to the network device.

The terminal in this application may be a virtualized device, for example, implemented by using general-purpose hardware and an instantiated virtualization function, or by using dedicated hardware and an instantiated virtualization function. The general-purpose hardware may be a server, for example, a cloud server.

It should be understood that specific forms of the radio access network device and the terminal are not limited in this application.

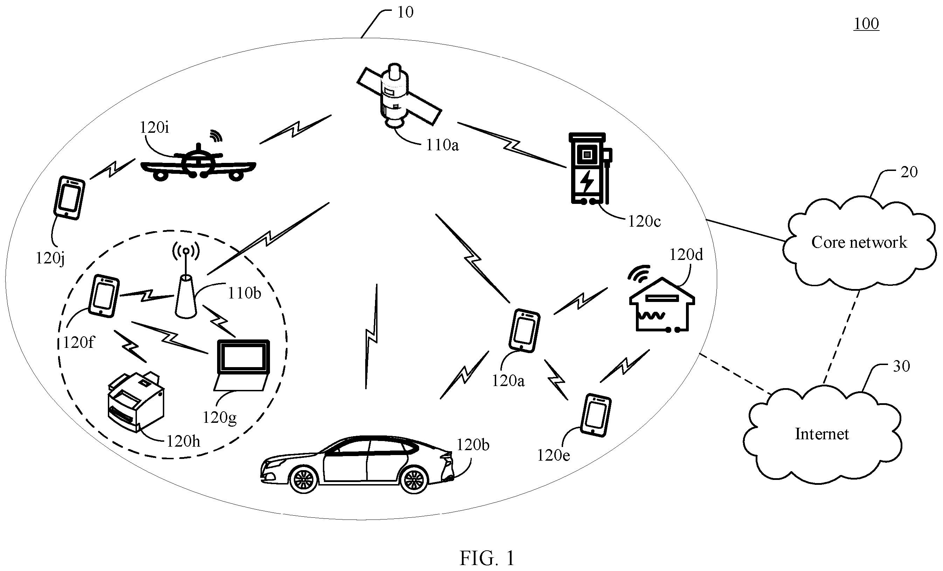

FIG. 1 is a diagram of an architecture of a communication system 100 to which a method according to an embodiment of this application is applicable. As shown in FIG. 1, the communication system 100 includes a radio access network 10 and a core network 20. Optionally, the communication system 100 may further include the Internet 30. The radio access network 10 may include at least one radio access network device (for example, 110a and 110b in FIG. 1), and may further include at least one terminal (for example, 120a to 120j in FIG. 1).

The terminal may be connected to the radio access network device in a wireless manner, and the radio access network device may be connected to the core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device. A wired or wireless manner may be used for a connection between terminals and a connection between radio access network devices.

Communication between the radio access network device and the terminal, between radio access network devices, and between terminals may be performed by using a licensed spectrum, an unlicensed spectrum, or both a licensed spectrum and an unlicensed spectrum, and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The radio access network device may be a base station deployed in the air, for example, may be a satellite base station 110a; or may be a base station deployed indoors, for example, may be a micro base station or indoor base station 110b.

The terminal may be a terminal deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 120g, or a printer 120h in FIG. 1.

The radio access network device and the terminal may be fixed or movable. For example, the radio access network device and the terminal may be deployed on land, including an indoor device, an outdoor device, a handheld device, or a vehicle-mounted device; or may be deployed on water; or may be deployed on an airplane, a balloon, or an artificial satellite in the air.

Roles of the radio access network device and the terminal may be relative. For example, the helicopter or uncrewed aerial vehicle 120i in FIG. 1 may be configured as a mobile base station. For 120j that accesses the radio access network 10 through 120i, 120i is a base station, while for 110a, 120i is a terminal. In other words, 110a and 120i communicate with each other by using a wireless air interface protocol. Certainly, 110a and 120i may alternatively communicate with each other by using an interface protocol between radio access network devices. In this case, for 110a, 120i is also a base station. Therefore, both the radio access network device and the terminal may be collectively referred to as a communication device. 110a, 110b, and 120a to 120j in FIG. 1 may be referred to as communication devices having respective corresponding functions, for example, a communication device having a base station function or a communication device having a terminal function.

It should be understood that, FIG. 1 is merely a diagram. The communication system may further include other devices, for example, may further include a wireless relay device and a wireless backhaul device, which are not shown in FIG. 1.

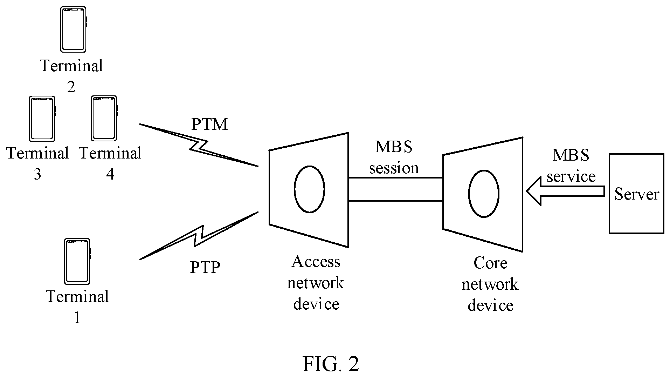

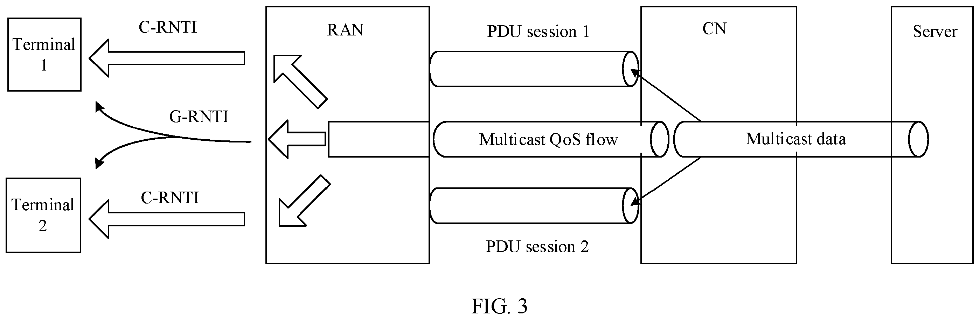

An MBS is a service, for example, a live streaming service, a public security service, or a batch software update service, oriented to a plurality of terminals. In this application, MBS, multicast, MBS service, MBS session, multicast service, and multicast session can be used interchangeably. The following describes a transmission process and a transmission architecture of the MBS with reference to FIG. 2 and FIG. 3.

FIG. 2 is a diagram of a transmission process of an MBS. As shown in FIG. 2, first, a server sends a data packet of the MBS to a core network, then a core network device sends the data packet of the MBS to an access network, and finally the access network sends the data packet of the MBS to at least one terminal.

As shown in FIG. 2, the server sends the MBS service to the core network. When the core network sends the data packet of the MBS to an access network device, the data packet may be transmitted through a public transmission channel MBS session, and each MBS session may include at least one MBS quality of service (quality of service, QoS) flow. When the access network device sends the data packet of the MBS to the terminal, the data packet is transmitted through an MBS radio bearer (radio bearer) (MRB for short). One MRB has two transmission modes: 1. point to multi-point (point to multi-point, PTM) transmission; and 2. point to point (point to point, PTP) transmission.

The multicast service is designed for a service with a high QoS requirement, and can provide a same QoS level as a unicast service. For the multicast service, the core network may manage joining and leaving of a terminal to and from the multicast service, and the access network device and the core network device may maintain information about a terminal in a multicast service group. Transmission between the core network and the access network relies on a protocol data unit (protocol data unit, PDU) session (session), and therefore an MBS QoS flow is introduced. A RAN supports sending of data to a terminal in two transmission modes: PTP and PTM, and supports dynamic switching between PTP and PTM that is controlled by the RAN.

FIG. 3 shows a transmission architecture of a multicast service. As shown in FIG. 3, a multicast service is transmitted between a core network and an access network by using an MBS session, and the MBS session includes an MBS QoS flow (or referred to as a multicast QoS flow). The MBS session may be associated with a PDU session of a terminal, and the MBS QoS flow is associated with a unicast QoS flow in the PDU session. A core network device may control a status of the MBS session to be an active state or an inactive state, and the terminal does not sense the status of the MBS session.

When an access network device sends the multicast service to the terminal, a PTM or PTP transmission mode may be used. In the PTM mode, data of the multicast service may be scrambled by using a group radio network temporary identifier (group radio network temporary identifier, G-RNTI). In the PTP mode, data of the multicast service is scrambled by using a cell radio network temporary identifier (cell radio network temporary identifier, C-RNTI). In addition, the access network device may control dynamic switching between the PTM transmission mode and the PTP transmission mode.

In a lossless handover scenario in an MBS, a source access network device and a target access network device need to exchange service progress in handover signaling, for the source access network device to determine a data packet forwarded to the target access network device, and the target access network device to determine a data packet forwarded to a terminal.

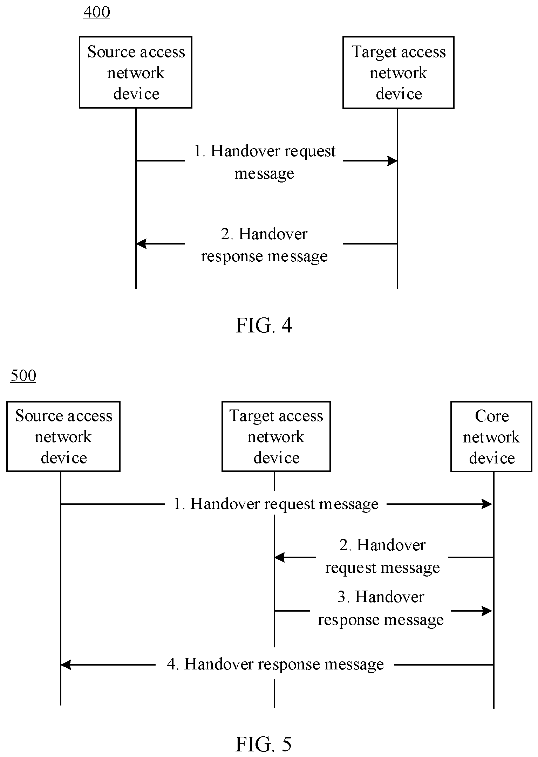

Xn-based handover is used as an example. With reference to FIG. 4, information that needs to be exchanged between a source access network device and a target access network device in an Xn-based lossless handover procedure is described.

FIG. 4 is a schematic flowchart of Xn interface-based lossless handover according to an embodiment of this application. As shown in FIG. 4, a method 400 may include S401 and S402. The following describes the steps of the method 400 in detail.

S401: A source access network device sends a handover request message to a target access network device, where the handover request message carries one or more of the following groups of information:
group 1: an MBS session identity (identity, ID), an area (area) session ID, and MBS session associated information (associated information), where the multicast session associated information includes an MBS QFI and a mapped unicast (mapped unicast) QFI;
group 2: an MBS session ID, an area session ID, an MBS service area, and QoS flow parameters (flow parameters); or
group 3: an MRB ID, MRB mapping information (mapping info), and MRB progress information (progress information), where the MRB progress information includes a PDCP SN, and the MRB progress information is used by the target access network device to determine a largest packet number of a data packet that is already sent by the source access network device side to a terminal.

Correspondingly, the target access network device receives the handover request message. For example, the target access network device may determine, based on the MRB progress information, whether to send a forwarding address and/or MRB progress information of the target access network device to the source access network device.

S402: The target access network device sends a handover response message to the source access network device, where the handover response message carries at least one of the following information: an MBS session ID, an MRB ID, a downlink (downlink, DL) data forwarding address (data forwarding address), or MRB progress information.

The MRB progress information includes a PDCP SN, the downlink data forwarding address is used by the source access network device to forward a data packet, and the MRB progress information is a packet number of an earliest data packet currently buffered on the target access network device side.

Correspondingly, the source access network device receives the handover response message. For example, a source base station may determine, based on the received MRB progress information, whether to forward data to the target access network device and specific data to be forwarded.

It may be understood that the handover response message may also be referred to as a handover request acknowledge message.

N2-based handover is used as an example. With reference to FIG. 5, information that needs to be provided by a source access network device to a target access network device in an N2-based lossless handover procedure is described.

FIG. 5 is a schematic flowchart of N2 interface-based lossless handover according to an embodiment of this application. As shown in FIG. 5, a method 500 may include S501 to S504. The following describes the steps of the method 500 in detail.

S501: A source access network device sends a handover request message to a core network device, and correspondingly the core network device receives the handover request message.

S502: The core network device sends the handover request message to a target access network device, and correspondingly the target access network device receives the handover request message.

The source access network device may include at least one of the following groups of information in the handover request message, and send the handover request message to the target access network device via the core network device: group 1: an MBS session ID, an area session ID, an MBS service area, and QoS flow parameters; or group 2: an MRB ID, MRB mapping information, and MRB progress information.

For a next generation application protocol (next generation application protocol, NGAP) interface, the core network device may further include at least one of the following groups of information in the handover request message, and send the handover request message to the target access network device: group 1: an MBS session ID and an area session ID; or group 2: MBS session associated information.

S503: The target access network device sends a handover response message to the core network device, and correspondingly the core network device receives the handover request message.

S504: The core network device sends the handover response message to the source access network device, and correspondingly the source access network device receives the handover response message.

The target access network device may include at least one of the following information in the handover response message, and send the handover response message to the source access network device via the core network device: an MBS session ID, an MRB ID, a DL data forwarding address, or MRB progress information.

In a new radio (new radio, NR) handover procedure, deterioration of a wireless environment between a terminal and an access network device may cause a measurement report reported by the terminal to fail to reach the access network device, or cause a handover command delivered by the access network device after receiving the measurement report to fail to reach the terminal. This leads to a handover failure, and in this case, the terminal identifies a wireless link failure and initiates RRC re-establishment.

Currently, to reduce a probability of a handover failure and improve handover reliability, CHO is proposed. The CHO allows the access network device to deliver a handover command (carrying a radio parameter configuration of a candidate target base station and a handover execution trigger condition) to the terminal in advance of further deterioration of the wireless environment between the terminal and the access network device, so that the terminal can know in advance how to access a target access network device. After finding, from candidate target access network devices, a target access network device that satisfies the handover trigger condition, the terminal can autonomously determine to initiate handover.

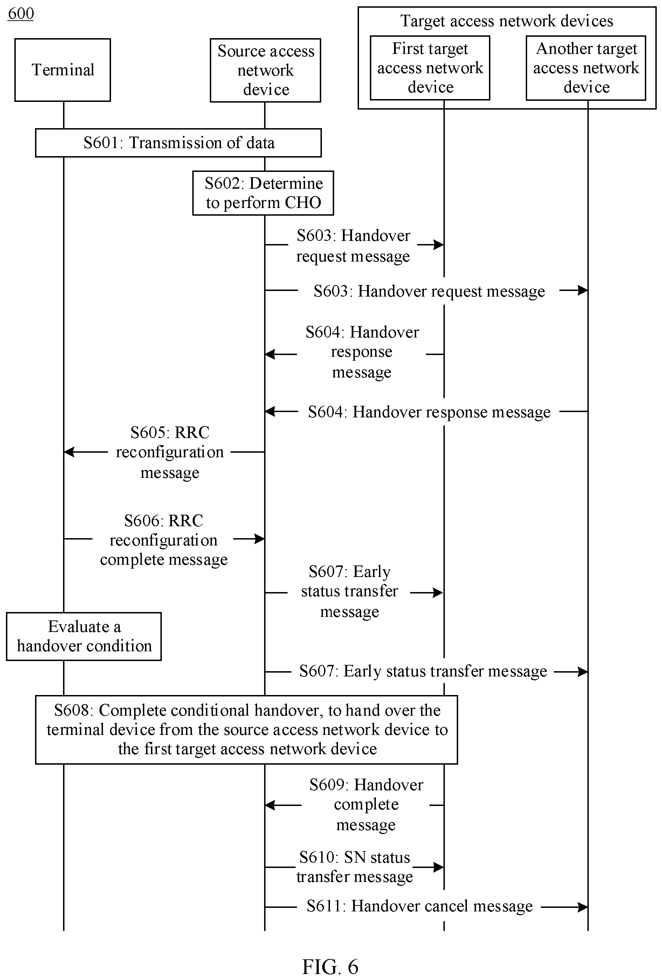

FIG. 6 is a schematic flowchart of a conditional handover method according to an embodiment of this application. As shown in FIG. 6, the method 600 may include S601 to S611. The following describes the steps of 600 in detail.

S601: A source access network device and a terminal perform transmission of data, where the data is data of a unicast service.

S602: The source access network device determines to perform conditional handover.

S603: The source access network device sends a handover request to a plurality of target access network devices, where the handover request is used to request to hand over the terminal from the source access network device to the target access network device.

The handover request carries a sequence number of a last data packet sent by the source access network device to the terminal before the handover request message is sent. In other words, the handover request carries a largest sequence number in sequence numbers corresponding to data packets of the unicast service that are sent by the source access network device to the terminal.

S604: The plurality of target access network devices send handover response messages to the source access network device, where the response messages are used to acknowledge the handover request.

S605: The source access network device sends an RRC reconfiguration message to the terminal.

The RRC reconfiguration message carries radio parameter configurations of the plurality of candidate target access network devices and a handover execution trigger condition.

S606: The terminal sends an RRC reconfiguration complete message to the source access network device.

After the terminal sends the RRC reconfiguration complete message to the source access network device, the terminal starts to evaluate a handover condition and still maintains a connection to the source access network device, and the source access network device may continue to send a data packet of the unicast service to the terminal.

S607: The source access network device sends an early status transfer (early status transfer) message, which is also referred to as an early status transfer message, to the plurality of target access network devices.

The early status transfer message may be triggered after the source access network device continues to send the data packet of the unicast service to the terminal, and is used to update, to the target access network device, progress of sending the data packet by the source access network device to the terminal.

For example, the early status transfer (early status transfer) message may carry a sequence number of a last data packet in the data packet that the source access network device continues to send to the terminal.

S608: Complete conditional handover, to hand over the terminal from the source access network device to a first target access network device.

When there are a plurality of target access network devices, the terminal determines, from the plurality of target access network devices, one target access network device (for example, the first target access network device) for access.

S609: The first target access network device sends a handover complete message to the source access network device, where the handover complete message is used to notify the source access network device that the first target access network device is successfully accessed.

S610: The source access network device sends an SN status transfer message to the first target access network device.

S611: The source access network device sends a handover cancel message to another target access network device.

To ensure a success rate of handover in an MBS, it is proposed that CHO be applied to handover including an MBS session. However, currently, there is no additional enhancement or adaptation solution of the CHO for the handover in the MRB. According to a current RRC signaling format, a CHO configuration directly references an RRC reconfiguration message (that is, the CHO configuration includes the RRC reconfiguration message), and there is no limitation on inclusion of an MRB configuration in the CHO configuration. In other words, a target access network device may include the MRB configuration in the CHO configuration, to support the CHO in multicast.

For a CHO handover procedure in the multicast, refer to the descriptions of the CHO handover procedure shown in FIG. 6. Differences between the two procedures are as follows: 1. In the CHO handover procedure in the multicast, a handover request message sent by a source access network device to a plurality of candidate target access network devices includes MBS information (that is, the handover request message sent in S603 further carries information related to the MBS). 2. The plurality of candidate target access network devices include MBS information in sent handover response messages (that is, the handover response messages sent in S604 further carry MBS information). 3. In a process in which a terminal evaluates a handover condition, the source access network device may continue to send a data packet of the MBS to the terminal, and the source access network device sends a data packet of the MBS to the plurality of target access network devices based on the MBS information carried in the handover request message, so that after the terminal accesses a target access network device, the target access network device can directly send a data packet to the terminal.

For descriptions of the MBS information, refer to the descriptions of the information carried in the handover request message and the handover response message in FIG. 5. Details are not described herein again.

However, when the CHO is applied to the handover including the MBS session, the following problems are found:

1. It can be learned from the foregoing descriptions of the lossless handover in the MBS that, to ensure that a data packet loss does not occur when a terminal is handed over from a source access network device to a candidate target access network device, in a lossless handover procedure in the MBS, the source access network device needs to send current MRB progress information to the candidate target access network device, and the candidate target access network device also sends MRB progress information of the candidate target access network device to the source access network device. In this way, the source access network device can send a data packet to the candidate target access network device based on the MRB progress information from the candidate target access network device side, so that the candidate target access network device can continue to send a data packet to the terminal based on the progress information and the data packet from the source access network device.

When the CHO is applied to the handover including the MBS session, in a CHO condition evaluation phase, the terminal may continue to receive a data packet of the multicast service from the source access network device for a period of time, and data forwarding between the source access network device and the candidate target access network device may also continue. The MRB progress information is carried in a handover request sent by the source access network device for the first time to the candidate target access network device. In this case, the candidate target access network device buffers a data packet of the MBS session based on the MRB progress information carried in the handover request message. However, because the terminal still continues to receive the data packet from the source access network device in the CHO condition evaluation phase, MRB progress changes. If the candidate target access network device still buffers the data packet of the MBS session based on the previously received MRB progress information, a large quantity of data packets of the MBS are buffered, and a large quantity of resources are required.

In view of this, this application provides a handover method and a related apparatus. In the method, a source access network device may send MRB progress information to a target access network device in time, so that the target access network device can delete, based on the MRB progress information, a data packet buffered on the target access network device, to reduce resources required by the target access network device for buffering data packets.

2. In the lossless handover in the MBS, after sending the handover request message to the candidate target access network device, the source access network device receives a handover response message sent by the second access network device. The handover response message may include MRB configuration information, and the MRB configuration information indicates an initial value of RX_DELIV. When the candidate target access network device transparently transmits the initial value of RX_DELIV to the terminal via the source access network device, the terminal may use the initial value as an initial value of RX_DELIV on the terminal side after accessing the candidate target access network device. The initial value of RX_DELIV is a reference value of RX_DELIV on the candidate target access network device side when the candidate target access network device sends the handover response message. A difference between the reference value and a latest value of RX_DELIV on the candidate target access network device side is less than or equal to 2^{*p*-1}, and the reference value is less than or equal to the latest value. P indicates a quantity of bits identifying a PDCP SN. For example, if the PDCP SN is represented by using 12 bits, P is equal to 12.

For example, an identifier value of a PDCP SDU may be referred to as a COUNT. The COUNT includes an HFN and a PDCP SN. The PDCP SN is added to a PDU for transmission, and the HFN is maintained by a transmit end and a receive end. A PDCP PDU sent by the transmit end to the receive end includes an SN, but does not include a COUNT or an HFN. The receive side calculates an HFN based on the received SN, to derive a COUNT value. In other words, the receive side combines the calculated HFN and the SN carried in the PDCP PDU into the COUNT corresponding to the PDCP PDU. A PDCP receives, in a form of a receive window and a reordering timer (reordering timer), a PDCP PDU delivered by a lower layer. The receive window moves according to update of a lower-boundary state variable (RX_DELIV) of the receive window. Because a state variable is described by using a COUNT value, after receiving the PDCP PDU, the PDCP needs to determine a correct HFN and COUNT based on an SN in a PDCP PDU subheader and a current receive window state variable, to perform deciphering and integrity verification based on the obtained COUNT.

When the CHO is applied to the handover including the MBS session, after receiving the initial value of RX_DELIV from the candidate target access network device, the terminal still stays in the source access network device for a period of time. In this case, the candidate target access network device may continue to send a data packet of the MBS to the terminal connected to the candidate target access network device. As a result, a value of RX_DELIV on the candidate target access network device side changes to a second value. If a difference between the second value and the initial value previously carried in the handover response message is greater than or equal to 2^{*p*-1}, it is considered that RX_DELIV carried in the handover response message expires. In other words, if the terminal still determines an HFN based on the previously received initial value, an incorrect HFN is obtained, causing disorder of received data packets.

In view of this, this application provides a handover method and a related apparatus. In the method, a source access network device may send an updated value of RX_DELIV to a target access network device in time, so that a terminal can receive a data packet based on the updated value of RX_DELIV after accessing the target access network device.

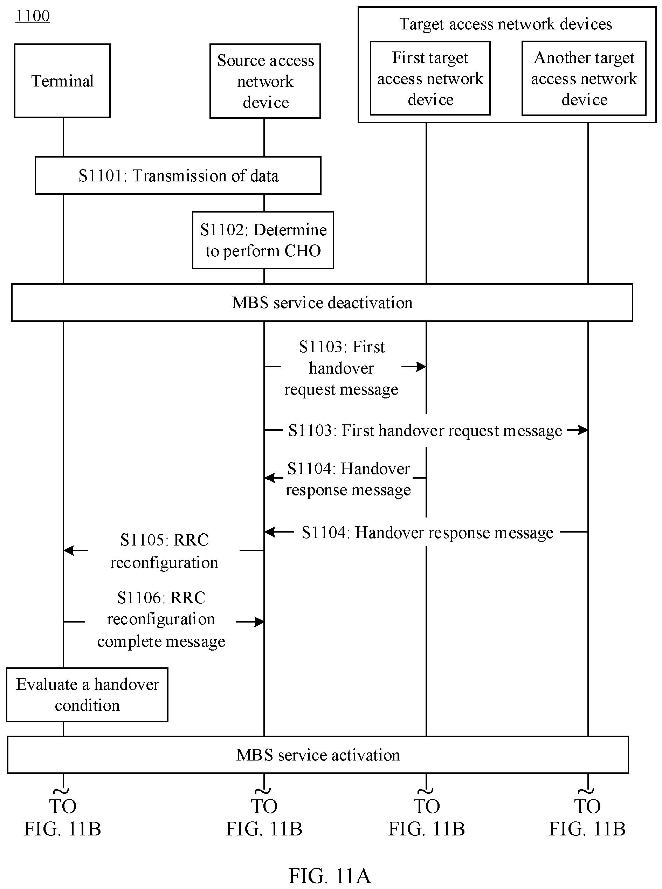

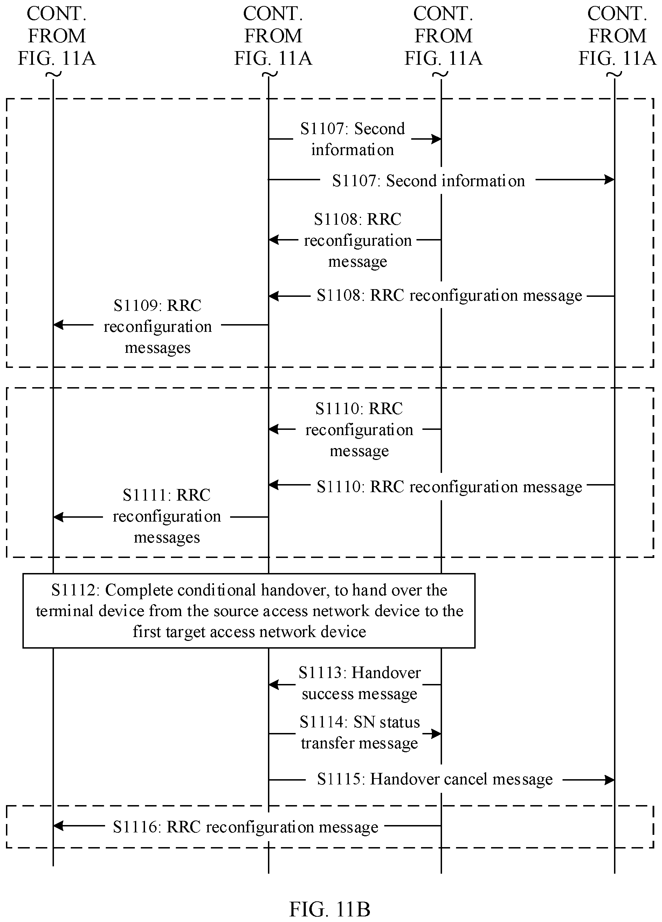

3. When the CHO is applied to the handover including the MBS session, after the MBS service is deactivated, an access network device may release or retain an MRB. If the candidate target access network device deletes an MRB configuration from an RRC configuration after the MBS service is deactivated, after the MBS service is activated again, the access network device may not include an MRB configuration in an RRC reconfiguration message. As a result, after the terminal accesses the target access network device, the terminal cannot receive a data packet of an MRB session. MBS service deactivation means that data of the MBS session is not transmitted, but the MBS session is retained. To enable the terminal accessing the target access network device to continue to receive a data packet of the MBS session after the MBS service is activated, this application provides a method implementation shown in FIG. 11A and FIG. 11B.

In view of this, this application provides a handover method and a related apparatus. In the method, an access network device may send an MRB configuration to a terminal after an MBS service is activated, so that the terminal can continue to receive a data packet of an MBS session after accessing a target access network device.

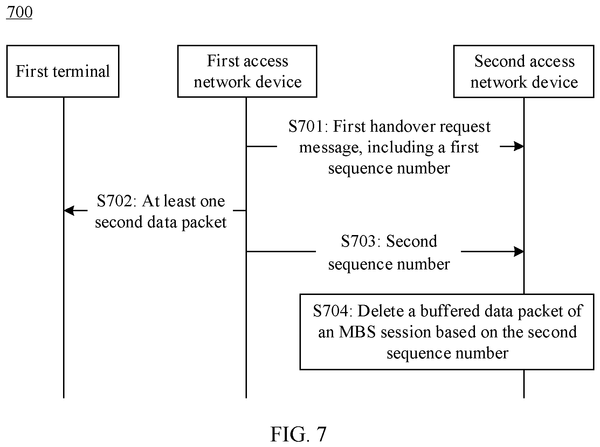

The following describes a method provided in embodiments of this application in detail with reference to FIG. 7 to FIG. 11A and FIG. 11B. The method may be applied to the communication system shown in FIG. 1. However, this is not limited in embodiments of this application.

In flowcharts of FIG. 7 to FIG. 11A and FIG. 11B, the method is shown from a perspective of interaction between communication devices. However, an entity for performing the method is not limited in this application. For example, an access network device in FIG. 7 to FIG. 11A and FIG. 11B may be a chip, a chip system, or a processor that supports the access network device in implementing the method, or may be a logical module or software that can implement all or some functions of the access network device. A terminal in FIG. 7 to FIG. 11A and FIG. 11B may be a chip, a chip system, or a processor that supports the terminal in implementing the method, or may be a logical module or software that can implement all or some functions of the terminal.

FIG. 7 is a schematic flowchart of a handover method according to an embodiment of this application. As shown in FIG. 7, the method 700 may include S701 to S704. The following describes the steps of the method 700 in detail.

S701: A first access network device sends a first handover request message to a second access network device, where the first handover request message includes a first sequence number, and correspondingly the second access network device receives the first handover request message from the first access network device.

The first sequence number is a sequence number of a last first data packet in at least one first data packet sent by the first access network device to a first terminal. In other words, the first sequence number is a largest sequence number in a sequence number corresponding to the at least one first data packet sent by the first access network device to the first terminal. In other words, the first sequence number is a sequence number of a last first data packet sent by the first access network device to the first terminal before the first handover request message is sent.

The first sequence number may be a PDCP SN, a COUNT, a hyper frame number (hyper frame number, HFN), or another parameter that can identify a transmission sequence of data packets. This is not limited in this application. The COUNT is an identifier value of a PDCP SDU.

It may be understood that the first terminal in this application is a terminal connected to the first access network device. When each of a plurality of first terminals connected to the first access network device is configured with CHO, the first sequence number sent by the first access network device may be a first sequence number corresponding to each of the plurality of first terminals connected to the first access network device.

It may be further understood that the first handover request message is a handover request message sent by the first access network device to a plurality of target access network devices for the first time after the first access network device determines to perform conditional handover. The first handover request message is used to request to hand over the first terminal from the first access network device to the second access network device.

The first access network device may also be referred to as a source access network device, and the second access network device may also be referred to as a target access network device.

It may be understood that the first access network device may send the first handover request message to a plurality of candidate target access network devices, and the second access network device in this application may be an access network device that is to be accessed by the first terminal and that is in the plurality of candidate target access network devices.

Optionally, before S701, the method 700 further includes: The first access network device determines to perform conditional handover.

S702: The first access network device sends at least one second data packet to the first terminal, and correspondingly the first terminal receives the at least one second data packet from the first access network device.

The at least one first data packet and the at least one second data packet belong to a same MBS session (for example, a first MBS session).

It may be understood that, in this application, a data packet that is of the first MBS session and that is sent by the first access network device to the first terminal before the first access network device sends the first handover request message to the second access network device is referred to as a first data packet, and a data packet that is of the first MBS session and that is sent by the first access network device after sending the first handover request and after the first access network device sends the first handover request message to the second access network device and before the first terminal accesses the second access network device is referred to as a second data packet.

S703: The first access network device sends a second sequence number to the second access network device, and correspondingly the second access network device receives the second sequence number from the first access network device.

The second sequence number is a sequence number of a last second data packet in the at least one second data packet sent by the first access network device to the first terminal, and the second sequence number is greater than the first sequence number. In other words, the second sequence number is a largest sequence number in a sequence number corresponding to the at least one second data packet sent by the first access network device to the first terminal. In other words, the second sequence number is a sequence number of a last second data packet sent by the first access network device to the first terminal before the second sequence number is sent.

Similar to the first sequence number, the second sequence number may be a PDCP SN, a COUNT, an HFN, or another parameter that can identify a transmission sequence of data packets. This is not limited in this application.

It may be understood that, when each of the plurality of first terminals connected to the first access network device is configured with CHO, the second sequence number sent by the first access network device may be a second sequence number corresponding to a terminal with slowest progress in the plurality of first terminals connected to the first access network device.

It may be further understood that, after receiving the first handover request message, the second access network device may send a handover response message for the first handover request to the first access network device. The handover response message may carry the second sequence number.

For example, the first access network device may send the second sequence number to the second access network device after S701 when any one of the following conditions is satisfied: 1. Every time first duration elapses. 2. Every time a first quantity of second data packets are sent. The first duration and the first quantity may be predefined, or may be indicated by the second access network device to the first access network device.

For example, if the first access network device sends the second sequence number to the second access network device at an interval of the first duration after sending the first handover request message, if the first access network device does not send the at least one second data packet to the first terminal within the first duration, that is, S702 is not performed, that is, S703 is performed next after S701, the first sequence number is equal to the second sequence number.

S704: The second access network device deletes a buffered data packet of the MBS session based on the second sequence number. In other words, the second access network device deletes a buffered data packet of the MBS session based on the second sequence number.

It may be understood that the data packet of the MBS session deleted by the second access network device and the at least one second data packet (or the at least one first data packet) belong to the same MBS session.

With reference to the example in which the at least one first data packet and the at least one second data packet belong to the first MBS session, S704 may be replaced with the following: The second access network device deletes a buffered data packet of the first MBS session based on the second sequence number.

Optionally, the second access network device may delete a data packet that is in buffered data packets of the first MBS session and whose sequence number is less than or equal to the second sequence number.

The method 700 provided in this application is applied to a conditional handover scenario, to resolve a problem of excessive resources required by a target access network device for buffering data packets of an MBS session. In this embodiment of this application, after sending the first sequence number to the second access network device, the first access network device may further send the second sequence number to the second access network device. The first sequence number and the second sequence number respectively indicate last data packets of the MBS that are sent by the first access network device to the terminal in different time periods, and the second sequence number is greater than the first sequence number. In this case, after receiving the second sequence number, the second access network device may delete a data packet that is buffered on the second access network device and that corresponds to a sequence number less than the second sequence number. In comparison with a manner in which the second access network device deletes, based only on the first sequence number, a data packet buffered on the second access network device, this can effectively reduce resources used by the first access network device side for buffering data packets of the MBS session, to improve resource utilization, and this can also prevent the second access network device from sending a repeated data packet of the MBS to the terminal after the terminal accesses the second access network device.

Optionally, the second sequence number may be carried in the following message or signaling: a second handover request message, early status transfer (early status transfer) signaling, or MBS early status transfer signaling.

In a first possible implementation, the second sequence number is carried in early status transfer signaling.

In the flowchart of FIG. 6, the early status transfer signaling is signaling used to update data radio bearer (data radio bearer, DRB) progress. The early status transfer signaling shown in FIG. 6 includes a procedure stage information element indicating DRB sending progress.

In this application, an MBS procedure stage information element parallel to the procedure stage information element may be added to the early status transfer signaling, the MBS procedure sage information element includes a DL discarding branch, and the DL discarding branch includes a COUNT value (value) (an HFN and an SN) or an SN for an MRB. According to this solution, MRB progress information of each terminal may be independently sent to a candidate target access network device, for the candidate target access network device to delete a data packet of an MRB session.

In a second possible implementation, in this application, new signaling is introduced to carry the second sequence number. The new signaling is related to the MBS, and may indicate progress of one MBS session or progress of a plurality of MBS sessions.

For example, the new signaling may be MBS early status transfer signaling. The MBS early status transfer signaling may include an MBS procedure sage information element, the MBS procedure sage information element may include a DL discarding branch, and the DL discarding branch includes a COUNT value (value) (an HFN and an SN) or an SN for an MRB.

According to this method, the source access network device may update MRB progress based on an MBS session granularity. Because data forwarding between stations is actually also based on the MBS session granularity, the source access network device does not forward a plurality of pieces of data for different terminals receiving an MBS session, to reduce signaling overheads during MRB progress update.

In a third possible implementation, the second sequence number is carried in a second handover request message, and the second handover request message is used to request to hand over the first terminal from the first access network device to the second access network device.

The second handover request message is a handover request message that is sent, after the first access network device sends the first handover request message, by the first access network device to the second access network device again based on a trigger condition for sending the second sequence number. The trigger condition for sending the second sequence number is the first duration or sending of the first quantity of second data packets.

Optionally, the second handover request message may further include indication information, and the indication information may indicate the second access network device not to update an RRC configuration, or indicate the second access network device to update only MRB progress.

It may be understood that, in the CHO handover procedure, the source access network device re-triggers a handover request message (referred to as the second handover request message in this application) to a candidate target access network device. After receiving the handover request message, the candidate target access network device sends a handover response message to the source access network device, and includes an RRC reconfiguration message on the target access network device side in the handover response message. In the CHO handover procedure in the multicast, including the second sequence number in the second handover request message is for MRB progress update. Therefore, the second handover request may carry indication information indicating not to update an RRC configuration or indicating to update only MRB progress, to prevent the second access network device from repeatedly sending an RRC reconfiguration message.

Optionally, before S704, the method 700 further includes: The second access network device sends a third sequence number to the first access network device, where the third sequence number is an earliest sequence number buffered on the second access network device, or the third sequence number is a smallest sequence number in sequence numbers corresponding to data packets of the MBS session that are buffered on the second access network device, and correspondingly the first access network device receives the third sequence number from the second access network device.

A third data packet and the first data packet (or the second data packet) are data packets of the same MBS session.

Similar to the first sequence number, the third sequence number may be a PDCP SN, a COUNT, an HFN, or another parameter that can identify a transmission sequence of data packets. This is not limited in this application.

Optionally, before S704, the method 700 further includes: The first access network device sends at least one third data packet to the second access network device based on the first sequence number and the third sequence number, and correspondingly the second access network device receives the at least one third data packet from the first access network device.

The at least one third data packet and the at least one first data packet belong to the same MBS session.

For example, when the first sequence number is less than the third sequence number, the first access network device may send, to the second access network device, a data packet that is of the MBS session and that is identified by a sequence number less than the third sequence number.

Optionally, the second access network device may buffer the received at least one third data packet.

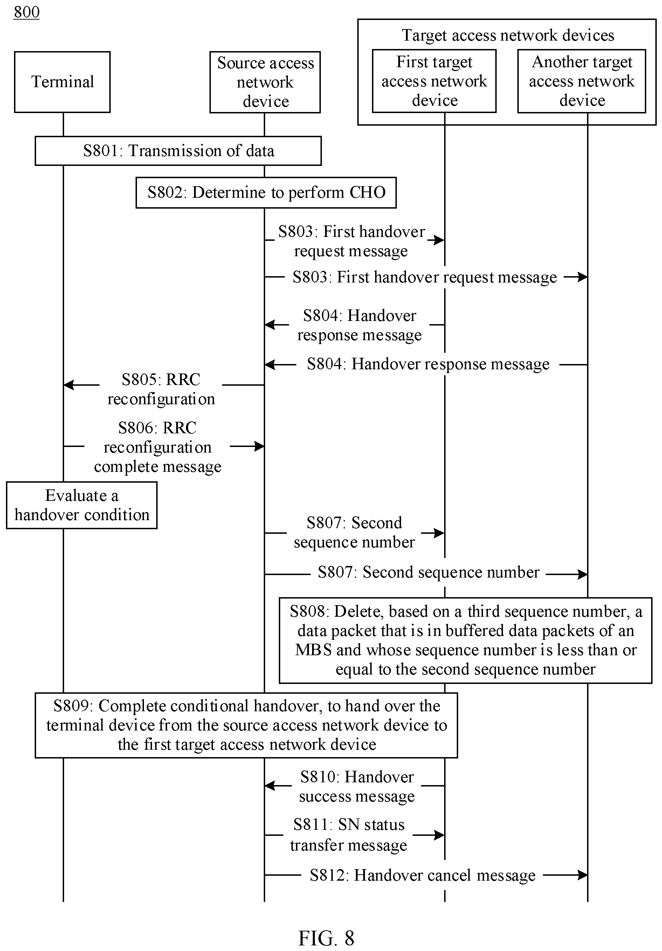

The following describes a specific procedure of the handover method provided in this application based on the embodiment shown in FIG. 7 with reference to FIG. 8. Content described in the embodiment shown in FIG. 7 is not described again. In the handover method shown in FIG. 8, an example in which a source access network device serves as a first access network device and a first target access network device serves as a second access network device is used for description.

FIG. 8 is another schematic flowchart of a handover method according to an embodiment of this application. As shown in FIG. 8, the method 800 may include S801 to S812. The following describes the steps of the method 800 in detail.

S801: A source access network device and a terminal perform transmission of data, where the data is data of an MBS session.

S802: The source access network device determines to perform conditional handover.

S803: The source access network device sends a first handover request message to a plurality of target access network devices, and correspondingly the plurality of target access network devices receive the first handover request message from the source access network device.

The plurality of target access network devices include a first target access network, and the first target access network device may be a target access network device to which the terminal is handed over from the source access network device.

The first handover request is used to request to hand over the terminal from the source access network device to any one of the plurality of target access network devices.

For descriptions of the first handover request, refer to related descriptions of S701. Details are not described herein again.

It may be understood that the first handover request may further carry an identifier of the MBS session, which identifies a service type to which at least one first data packet belongs.

S804: The plurality of target access network devices send handover response messages to the source access network device, where the handover response messages are used to acknowledge the first handover request, and correspondingly the source access network device receives the handover response messages from the plurality of target access network devices.

For example, each of the plurality of target access network devices may include a third sequence number and a first initial value of a first variable in the respective handover response message.

For descriptions of the third sequence number and the first variable, refer to related descriptions of the method 700. Details are not described herein again.

S805: The source access network device sends an RRC reconfiguration message to the terminal, and correspondingly the terminal receives the RRC reconfiguration message from the source access network device.

The RRC reconfiguration message includes radio parameter configurations of the plurality of target access network devices and a handover command of a handover execution trigger condition.

S806: The terminal sends an RRC reconfiguration complete message to the source access network device, and correspondingly the source access network device receives the RRC reconfiguration message from the terminal.

After S806, the terminal still maintains a connection to the source access network device, and starts to evaluate a handover condition. In a process in which the terminal evaluates the handover condition, the source target access network device may continue to send at least one second data packet to the terminal, and the first access network device continues to send at least one third data packet to the plurality of target access network devices based on a first sequence number and the third sequence number.

For descriptions of the at least one second data packet and the at least one third data packet, refer to related descriptions of the method 700. Details are not described herein again.

S807: The source access network device sends a second sequence number to the plurality of target access network devices, and correspondingly the plurality of target access network devices receive the second sequence number from the source access network device.

For descriptions of the second sequence number, refer to related descriptions of the method 700. Details are not described herein again.

S808: The plurality of target access network devices delete, based on the third sequence number, a data packet that is in buffered data packets of the MBS session and whose sequence number is less than or equal to the second sequence number.

For this process, refer to the descriptions of S704. Details are not described herein again.

S809: Complete conditional handover, to hand over the terminal from the source access network device to the first target access network device.

S810: The first target access network device sends a handover success message to the source access network device.

The handover success message is used to notify the source access network device that the first target access network device is successfully accessed.

S811: The source access network device sends an SN status transfer message to the first target access network device, and correspondingly the first target access network device receives the SN status transfer message from the source access network device.

S812: The source access network device sends a handover cancel message to another target access network device, and correspondingly the another target access network device receives the handover cancel message from the source access network device.

The method provided in this embodiment of this application can effectively prevent a target access network device from buffering excessive data packets, to reduce resources required by the target access network device for buffering data packets of the MBS, so as to improve resource utilization.

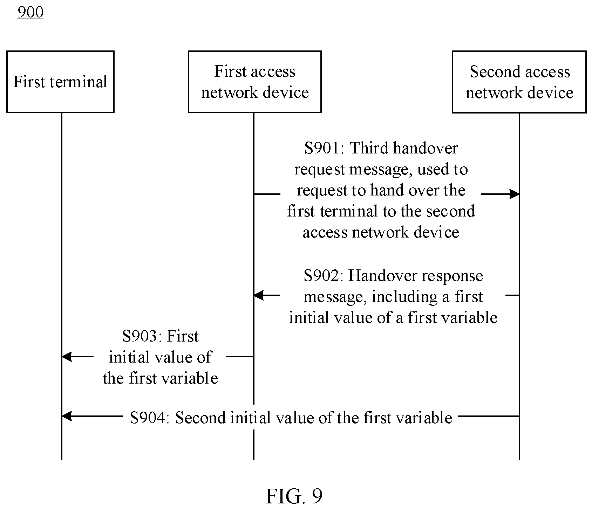

FIG. 9 is another schematic flowchart of a handover method according to an embodiment of this application. As shown in FIG. 9, the method 900 may include S901 to S904. The following describes the steps of the method 900 in detail.

S901: A first access network device sends a third handover request message to a second access network device, where the third handover request message is used to request to hand over a first terminal to the second access network device, and correspondingly the second access network device receives the third handover request message from the first access network device.

For descriptions of the first terminal, the first access network device, and the second access network device, refer to related descriptions of the method 700. Details are not described herein again.

Optionally, before S901, the method 900 further includes: The first access network device determines to perform conditional handover.

S902: The second access network device sends a handover response message to the first access network device, where the handover response message includes a first initial value of a first variable, and correspondingly the first access network device receives the handover response message from the second access network device.

The first variable indicates an identifier value of a 1^{st} PDCP SDU that is in a receive window and that is not delivered to an upper layer. For example, the first variable is RX_DELIV

S903: The first access network device sends the first initial value of the first variable to the first terminal, where the first initial value of the first variable may be carried in an RRC reconfiguration message.

S904: The second access network device sends a second initial value of the first variable to the first terminal, and correspondingly the first terminal receives the second initial value from the second access network device.

Optionally, the second initial value is greater than the first initial value. The second initial value is a reference value of the first variable on the second access network device side after the first terminal accesses the second access network device.

For descriptions of the reference value, refer to the foregoing descriptions. Details are not described herein again.

For example, the second access network device may directly send the second initial value of the first variable to the first terminal after the first terminal accesses the second access network device; or the second access network device may send the second initial value of the first variable to the first terminal via the first access network device before the first terminal accesses the second access network device.

It may be understood that, after the second access network device sends a handover success message to the first access network device, it may be considered that the first terminal accesses the second access network device. Otherwise, it is considered that the first terminal does not access the second access network device.

The method 900 provided in this application is applied to a conditional handover scenario, to resolve a problem that an initial value of a first variable on a terminal side expires. In this embodiment of this application, after sending the initial value of the first variable to the first terminal, the second access network device may send the second initial value of the first variable to the first terminal, so that the first terminal updates the initial value of the first variable. In this way, after accessing the second access network device, the first terminal can receive a data packet of an MBS session from the second access network device based on the updated second initial value, to effectively eliminate a possibility that the terminal receives a disordered data packet.

The following describes in detail two manners in which the second access network device updates the initial value of the first variable to the first terminal.

**Manner** 1: The second access network device directly sends the initial value of the first variable to the first terminal. In other words, the first terminal accesses the second access network device.

For example, after the first terminal accesses the second access network device, the second access network device sends the second initial value to the first terminal. Correspondingly, the first terminal receives the second initial value.

Optionally, the second initial value may be carried in an RRC reconfiguration message. The RRC reconfiguration message may be directly sent by the second access network device to the first terminal after the first terminal accesses the second access network device.

**Manner** 2: The second access network device sends the initial value of the first variable to the first terminal via the first access network device. In other words, the first terminal does not access the second access network device.

Example 1: The second access network device sends the second initial value to the first access network device. Correspondingly, the first access network device receives the second initial value, and sends the second initial value to the first terminal.

Optionally, in Manner 1 and the manner in Example 1, before the second access network device sends the second initial value of the first variable (to the first access network device or to the first terminal), the method 900 further includes: The second access network device determines whether a quantity of sent data packets of the MBS session is greater than a preset value.

For example, when the quantity of data packets of the MBS session that are sent by the second access network device is greater than the preset value, the second access network device sends the second initial value of the first variable; or when the quantity of data packets of the MBS that are sent by the second access network device is less than or equal to the preset value, the second access network device does not send the second initial value of the first variable.

The preset value and a size of the receive window satisfy a preset relationship.

For example, the preset relationship is as follows: Preset value=*k*×Size of the receive window, where k is greater than 0 and less than or equal to 1, N indicates the size of the receive window, N satisfies: N=2^{*p*-1}, and *P* indicates a quantity of bits identifying a first sequence number. For example, if the first sequence number is represented by using 12 bits, P is equal to 12.

It may be understood that the data packet of the MBS session sent by the second access network device is a data packet of the MBS session sent by the second access network device to the second terminal, and the data packet of the MBS session and at least one first data packet (or at least one second data packet) belong to the same MBS session.

Example 2: When receiving first information from the first access network device, the second access network device sends the second initial value to the first access network device. Correspondingly, the first access network device receives the second initial value, and sends the second initial value to the first terminal.

The first information is used to request the second initial value of the first variable.

Optionally, the method 900 further includes: The first access network device determines whether a quantity of at least one second data packet sent to the first terminal is greater than a preset value; and when the quantity of the at least one second data packet is greater than the preset value, the first access network device sends the first information to the second access network device, or when the quantity of the at least one second data packet is less than or equal to the preset value, the first access network device skips sending the first information to the second access network device.

For descriptions of the preset value, refer to the descriptions of Example 1. Details are not described herein again. It should be noted that, when determining whether the quantity of the at least one second data packet is greater than the preset value, the second access network device needs to first determine a size of the preset value. The preset value and a size of the receive window satisfy a preset relationship. For the preset relationship, refer to the descriptions of Manner 1. When the size N of the interface window is calculated, if the first access network device does not determine a quantity of bits used by the second access network device to identify a first sequence number, 12 bits may be used for calculation.

In the manner in Example 2, the second initial value of the first variable is actively requested by the first access network device. Therefore, the second initial value may be the same as the first initial value.

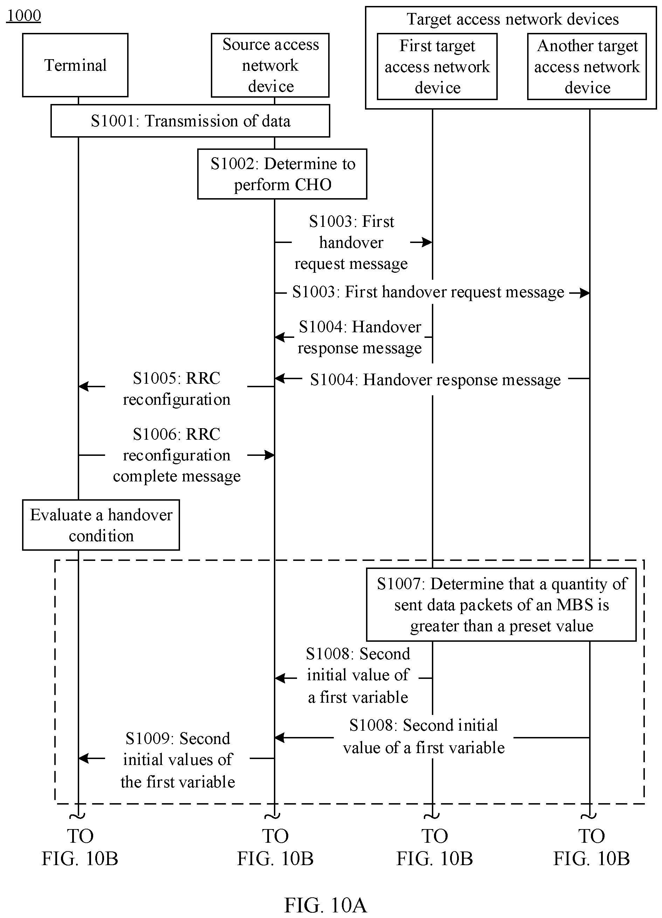

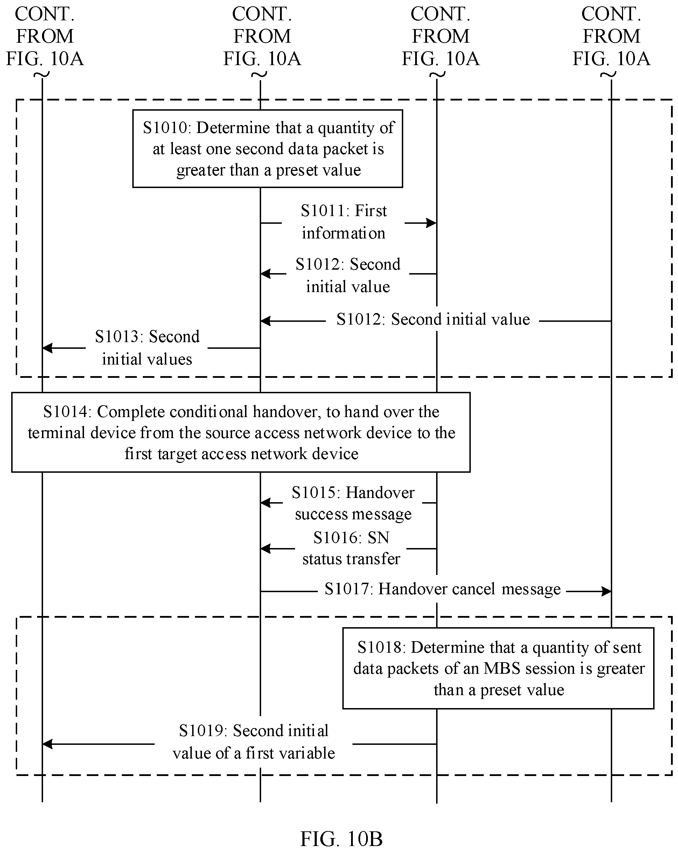

The following describes a specific procedure of the handover method provided in this application based on the embodiment shown in FIG. 9 with reference to FIG. 10A and FIG. 10B. Content described in the embodiment shown in FIG. 9 is not described again. In the handover method shown in FIG. 10A and FIG. 10B, an example in which a source access network device serves as a first access network device and a first target access network device serves as a second access network device is used for description.

FIG. 10A and FIG. 10B are another schematic flowchart of a handover method according to an embodiment of this application. As shown in FIG. 10A and FIG. 10B, the method 1000 may include S1001 to S1019. The following describes the steps of the method 1000 in detail.

S1001: A source access network device and a terminal perform transmission of data, where the data is data of an MBS.

S1002: The source access network device determines to perform conditional handover.

S1003: The source access network device sends a first handover request message to a plurality of target access network devices, and correspondingly the plurality of target access network devices receive the first handover request message from the source access network device.

The processes shown in S1001 to S1003 are the same as the processes shown in S801 to S803. Details are not described herein again.

S1004: The plurality of target access network devices send handover response messages to the source access network device, where the handover response messages are used to acknowledge the first handover request, and correspondingly the source access network device receives the handover response messages from the plurality of target access network devices.

The handover response messages carry first initial values of a first variable. For descriptions of the first variable and the first initial value, refer to related descriptions of the method 700. Details are not described herein again.

S1005: The source access network device sends an RRC reconfiguration message to the terminal, and correspondingly the terminal receives the RRC reconfiguration message from the source access network device.

The RRC reconfiguration message includes radio parameter configurations of the plurality of target access network devices and a handover command of a handover execution trigger condition.

Optionally, the RRC reconfiguration message includes the initial values of the first variable that are configured by the plurality of target access network devices for the terminal.

Correspondingly, the terminal receives and buffers the first initial values of the first variable from the plurality of target access network devices, and calculates, after being handed over to a first target access network device in the plurality of target access network devices, a COUNT value by using an initial value of the first variable from the first target access network device.

S1006: The terminal sends an RRC reconfiguration complete message to the source access network device, and correspondingly the source access network device receives the RRC reconfiguration message from the terminal.

After S1006, the terminal still maintains a connection to the source access network device, and starts to evaluate a handover condition. In a process in which the terminal evaluates the handover condition, the plurality of target access network devices may continue to send data packets of the MBS to terminals connected to the plurality of target access network devices, and the first access network device may continue to send at least one second data packet to the terminal.

For descriptions of the at least one second data packet, refer to the descriptions of the method 700. Details are not described herein again.

S1007: The plurality of target access network devices determine that a quantity of sent data packets of the MBS is greater than a preset value.

S1008: The plurality of target access network devices separately send second initial values of the first variable to the source access network device, and correspondingly the source access network device receives the second initial values of the first variable from the plurality of target access network devices.

For descriptions of the second initial value, refer to the description of the method 700. Details are not described herein again.

S1009: The source access network device sends the second initial values of the first variable to the terminal, and correspondingly the terminal receives the second initial values of the first variable from the first access network device, to calculate, after being handed over to the first target access network device in the plurality of target access network devices, a COUNT value by using an initial value of the first variable from the first target access network device.

S1010: The source access network device determines that a quantity of the at least one second data packet is greater than a preset value.

S1011: The source access network device sends first information to the plurality of target access network devices, and correspondingly the plurality of target access network devices receive the first information from the source access network device.

For descriptions of the first information, refer to the descriptions of the method 700. Details are not described herein again.

S1012: The plurality of target access network devices send second initial values to the source access network device, and correspondingly the source access network device receives the second initial values from the plurality of target access network devices.

S1013: The source access network device sends the second initial values to the terminal, and correspondingly the terminal receives the second initial values from the source access network device.

For descriptions of the second initial value, refer to the description of the method 700. Details are not described herein again.

S1014: Complete conditional handover, to hand over the terminal from the source access network device to the first target access network device.

When there are a plurality of target access network devices, the terminal determines, from the plurality of target access network devices, only one target access network device (for example, the first target access network device) for access.

S1015: The first target access network device sends a handover success message to the source access network device, and correspondingly the source access network device receives the handover success message from the first target access network device.

The handover success message is used to notify the source access network device that the first target access network device is successfully accessed.

S1016: The source access network device sends an SN status transfer message to the first target access network device, and correspondingly the first target access network device receives the SN status transfer message from the source access network device.

S1017: The source access network device sends a handover cancel message to another target access network device, and correspondingly the another target access network device receives the handover cancel message from the source access network device.

S1018: The first target access network device determines that a sent data packet of the MBS session is greater than a preset value.

S1019: The first target access network device sends a second initial value of the first variable to the terminal, and correspondingly the terminal receives the second initial value of the first variable from the first target access network device.

It should be noted that S107 to S1013, and S1018 and S1019 are optional steps. For example, when S107 to S1010 are further performed after S106, S1011 to S1013 and S1018 and S1019 may not be performed. For another example, when S1011 to S1013 are further performed after S106, S107 to S1010 and S1018 and S1019 may not be performed. For still another example, when S107 to S1013 are not performed after S106, S1018 and S1019 may be further performed after S1017.

The method provided in this embodiment of this application can effectively eliminate a possibility that the terminal receives a disordered data packet.

It may be understood that the embodiments shown in FIG. 7 and FIG. 9 (or FIG. 8 and FIG. 10A and FIG. 10B) may be combined or independently implemented. When FIG. 7 and FIG. 9 (FIG. 8 and FIG. 10A and FIG. 10B) are independently implemented, more or fewer steps than the steps shown in FIG. 7 or FIG. 9 (FIG. 8 or FIG. 10A and FIG. 10B) may be performed. When the embodiments shown in FIG. 7 and FIG. 9 (or FIG. 8 and FIG. 10A and FIG. 10B) are combined, a communication method provided in this application may include the following: A handover request message (for example, a first handover request message or a third handover request message) sent by a first access network device to a second access network device for the first time includes a first sequence number, a handover response message sent by the second access network device to the first access network device includes a second sequence number and a first initial value of a first variable, and an RRC reconfiguration message sent by the first access network device to a first terminal carries the first initial value of the first variable. For other detailed procedures, refer to the descriptions of the embodiments shown in FIG. 7 and FIG. 9 (or FIG. 8 and FIG. 10A and FIG. 10B).

FIG. 11A and FIG. 11B are still another schematic flowchart of a handover method according to an embodiment of this application. As shown in FIG. 11A and FIG. 11B, the method 1100 may include S1101 to S1116. The following describes the steps of the method 1100 in detail.

S1101: A source access network device and a terminal perform transmission of data, where the data is data of an MBS.

S1102: The source access network device determines to perform conditional handover.

S1103: The source access network device sends a first handover request message to a plurality of target access network devices, where the first handover request message carries a first identifier, and correspondingly the plurality of target access network devices receive the first handover request message from the source access network device.

The first identifier identifies an MBS session, and a status of the MBS session is an inactive state.

S1104: The plurality of target access network devices send handover response messages to the source access network device, where the handover response messages are used to acknowledge the first handover request, and correspondingly the source access network device receives the handover response messages from the plurality of target access network devices.

When the first handover request message is a handover request message sent in conditional handover, when the plurality of target access network devices determine, after receiving the first handover request message, that the status of the MBS session is the inactive state, the handover response messages sent to the source access network device carry MRB configurations.

S1105: The source access network device sends an RRC reconfiguration message to the terminal, where the RRC reconfiguration message includes an MRB configuration, and correspondingly the terminal receives the RRC reconfiguration message from the source access network device.

S1106: The terminal sends an RRC reconfiguration complete message to the source access network device, and correspondingly the source access network device receives the RRC reconfiguration complete message from the terminal.

After S1106, the terminal still maintains a connection to the source access network device, and starts to evaluate a handover condition.

S1107: When a first condition is satisfied, the source access network device sends second information to the plurality of target access network devices, and correspondingly the plurality of target access network devices receive the second information from the source access network device, where the second information is used to request the plurality of target access network devices to update RRC configurations.

The first condition is that the status of the MBS session is an active state. In other words, when the status of the MBS session is the active state, the source access network device sends the second information to the plurality of target access network devices.

For example, when the source access network device receives a notification message for activating the MBS session, or when the source access network device determines that the status of the MBS session is the active state, or when the source access network device receives a group paging message from another access network device, it may be considered that the first condition is satisfied.

S1108: The plurality of target access network devices send RRC reconfiguration messages to the source access network device again, and correspondingly the source access network device receives the RRC reconfiguration messages from the plurality of target access network devices, where the RRC reconfiguration messages carry MRB configurations.

S1109: The source access network device forwards the RRC reconfiguration messages received again to the terminal, and correspondingly the terminal receives the RRC reconfiguration messages from the source access network device.

S1110: When a first condition is satisfied, the plurality of target access network devices send RRC reconfiguration messages to the source access network device again, where the RRC reconfiguration messages carry MRB configurations, and correspondingly the source access network device receives the RRC reconfiguration messages from the plurality of target access network devices.

For descriptions of the first condition, refer to the descriptions of S1107. Details are not described herein again. In other words, when the status of the MBS session is an active state, the plurality of target access network devices send the RRC reconfiguration messages to the source access network device again.

For example, when the plurality of target access network devices receive a notification message for activating the MBS session, or when the plurality of target access network devices determine that the status of the MBS session is the active state, or when the plurality of target access network devices receive a group paging message from another access network device, it may be considered that the first condition is satisfied.

Optionally, when receiving an MBS session activation notification, the plurality of target access network devices may determine whether the handover response messages sent by the plurality of target access network devices in S1104 carry MBS configurations. If the MBS configurations are carried, the plurality of target access network devices may not include the MRB configurations in the sent RRC reconfiguration messages in S1110.

S1111: The source access network device forwards the RRC reconfiguration messages received again to the terminal, and correspondingly the terminal receives the RRC reconfiguration messages from the source access network device.

S1112: Complete conditional handover, to hand over the terminal from the source access network device to a first target access network device.

When there are a plurality of target access network devices, the terminal determines, from the plurality of target access network devices, only one target access network device (for example, the first target access network device) for access.

S1113: The first target access network device sends a handover success message to the source access network device, and correspondingly the source access network device receives the handover success message from the first target access network device.

The handover success message is used to notify the source access network device that the first target access network device is successfully accessed.

S1114: The source access network device sends an SN status transfer message to the first target access network device, and correspondingly the first target access network device receives the SN status transfer message from the source access network device.

S1115: The source access network device sends a handover cancel message to another target access network device, and correspondingly the another target access network device receives the handover cancel message from the source access network device.

S1116: When a first condition is satisfied, the first target access network device sends an RRC reconfiguration message to the terminal, where the RRC reconfiguration message carries an MRB configuration, and correspondingly the terminal receives the RRC reconfiguration message from the first target access network device.

For descriptions of the first condition, refer to the descriptions of S1107. Details are not described herein again. In other words, when the status of the MBS session is an active state, the first target access network device sends the RRC reconfiguration message to the terminal.

For example, when the first target access network device receives a notification message for activating the MBS session, or when the first target access network device determines that the status of the MBS session is the active state, or when the first target access network device receives a group paging message from another access network device, it may be considered that the first condition is satisfied.

Optionally, after the terminal accesses the first target access network device, when the status of the MBS session is the active state, the first target access network device may determine whether the handover response message sent in S1104 carries the MRB configuration, and if the MRB configuration is carried, the RRC configuration message sent in S1116 may not include the MRB configuration; and/or the first target access network device may determine whether the RRC reconfiguration message sent in S1110 carries the MRB configuration, and if the MRB configuration is carried, the RRC configuration message sent in S1116 may not include the MRB configuration.

It should be noted that, if the handover response messages sent by the plurality of target access network devices to the source access network device in S1104 carry the MRB configurations, S1107 to S1111 and S1116 are optional steps. In other words, when the handover response messages in S1104 carry the MRB configurations, S1107 to S1111 and S1016 may not be performed. Alternatively, when the handover response messages in S1104 carry the MRB configurations, S1107 to S1111 and S1016 may be further performed, and a specific performing process thereof is as follows: 1. when S1107 to S1109 are further performed after S1106, (S1110 and S1111) and/or S1116 may not be performed; or 2. when S1110 and S1111 are further performed after S1106, (S1107 to S1109) and/or S1116 may not be performed; or 3. when (S1107 to S1109) and/or (S1110 and S1111) are not performed after S1106, S1116 may be further performed after S1115.

Alternatively, if the handover response messages sent by the plurality of target access network devices to the source access network device in S1104 do not carry the MRB configurations, a specific performing process of S1107 to S1111 and S1116 is as follows: 1. when S1107 to S1109 are further performed after S1106, (S1110 and S1111) and/or S1116 may not be performed; or 2. when S1110 and S1111 are further performed after S1106, (S1107 to S1109) and/or S1116 may not be performed; or 3. when (S1107 to S1109) and/or (S1110 and S1111) are not performed after S1106, S1116 may be further performed after S1115.

It should be further noted that, when CHO is applied to handover including an MBS session, a CHO handover procedure may include more or fewer steps than the steps shown in FIG. 11A and FIG. 11B.

The method 1100 provided in this application is applied to a conditional handover scenario, to resolve a problem that an access network device does not update an MRB configuration when an MBS service is switched from an inactive state to an active state. In this embodiment of this application, after the MBS service is activated, an MRB configuration may be carried in an RRC configuration, so that a terminal can normally receive a data packet of an MBS session after accessing a target access network device.

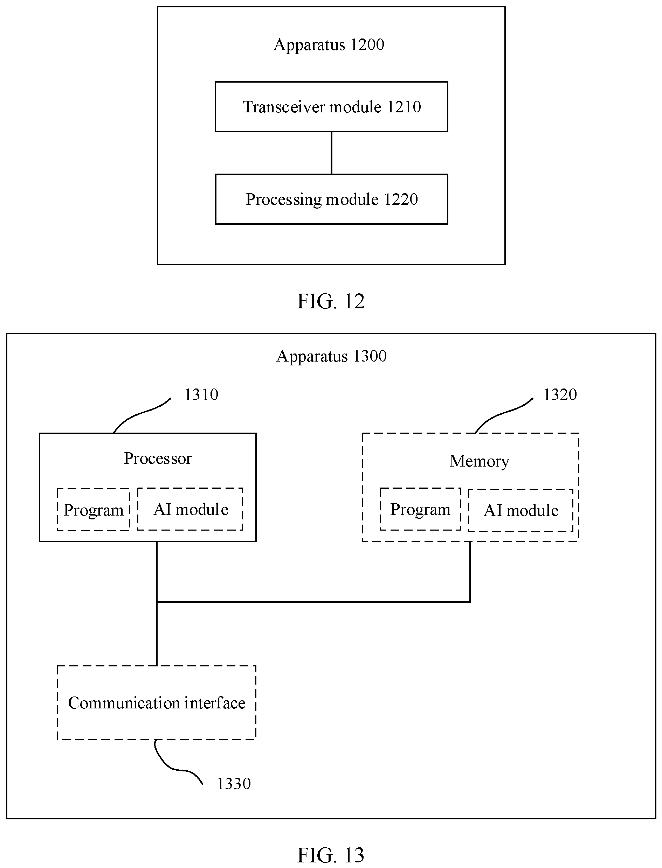

The foregoing describes the method provided in embodiments of this application in detail with reference to FIG. 1 to FIG. 11A and FIG. 11B. The following describes apparatuses provided in embodiments of this application with reference to FIG. 12 to FIG. 14.

FIG. 12 and FIG. 13 are diagrams of possible apparatuses according to embodiments of this application. These apparatuses may be configured to implement functions of the first access network device or the second access network device in the foregoing method embodiments, and therefore can also implement beneficial effects of the foregoing method embodiments.

FIG. 12 is a block diagram of an apparatus according to an embodiment of this application. As shown in FIG. 12, the apparatus 1200 includes a transceiver module 1210 and a processing module 1220.

In a possible design, the apparatus 1200 is configured to implement functions of the first access network device in the method embodiments shown in FIG. 7 to FIG. 11A and FIG. 11B.

For example, the transceiver module 1210 is configured to: send a first handover request message to a second access network device, where the first handover request message is used to request to hand over a terminal from the first access network device to the second access network device, the first handover request message includes a first sequence number, and the first sequence number is a sequence number of a last first data packet in at least one first data packet sent by the first access network device to the terminal; send at least one second data packet to the terminal; and send a second sequence number to the second access network device, where the second sequence number is a sequence number of a last second data packet in the at least one second data packet sent by the first access network device to the terminal, and the second sequence number is greater than the first sequence number. The at least one first data packet and the at least one second data packet belong to a same multicast and broadcast service MBS.

Optionally, the processing module 1220 is configured to determine to perform conditional handover.

Optionally, the transceiver module 1210 is further configured to: receive a handover response message from the second access network device, where the handover response message includes a first initial value of a first variable, and the first variable indicates an identifier value of a 1^{st} packet data convergence protocol PDCP service data unit SDU that is in a receive window and that is not delivered to an upper layer; and send the first initial value of the first variable to the terminal.

Optionally, the transceiver module 1210 is further configured to: receive a second initial value from the second access network device, where the second initial value is greater than the first initial value; and send the second initial value to the terminal.

Optionally, the processing module 1220 is further configured to determine whether a quantity of the at least one second data packet is greater than a preset value. The transceiver module 1210 is further configured to: when the quantity of the at least one second data packet is greater than the preset value, send first information to the second access network device, where the first information is used to request a second initial value of the first variable, and the second initial value is greater than the first initial value; receive the second initial value from the second access network device; and send the second initial value to the terminal.

For example, the transceiver module 1210 is configured to: send a third handover request message to a second access network device, where the third handover request message is used to request to hand over a first terminal to the second access network device; receive a handover response message from the second access network device, where the handover response message includes a first initial value of a first variable, and the first variable indicates an identifier value of a 1^{st} PDCP SDU that is in a receive window and that is not delivered to an upper layer; receive a second initial value from the second access network device, where the second initial value is greater than the first initial value; and send the second initial value to the terminal.

For more detailed descriptions of the transceiver module 1210 and the processing module 1220, directly refer to related descriptions of the embodiments shown in FIG. 7 to FIG. 11A and FIG. 11B. Details are not described herein again.

In another possible design, the apparatus 1200 is configured to implement functions of the second access network device in the method embodiments shown in FIG. 7 to FIG. 11A and FIG. 11B.

For example, the transceiver module 1210 is configured to: receive a first handover request message from a first access network device, where the first handover request message is used to request to hand over a terminal from the first access network device to the second access network device, the first handover request message includes a first sequence number, and the first sequence number is a sequence number of a last first data packet in at least one data packet sent by the first access network device to the terminal; and receive a second sequence number from the first access network device, where the second sequence number is a sequence number of a last second data packet in at least one second data packet sent by the first access network device to the terminal, the second sequence number is greater than the first sequence number, and the at least one first data packet and the at least one second data packet belong to a same multicast and broadcast service MBS. The processing module 1220 is configured to delete a data packet that is in buffered data packets of the MBS and that is identified by a sequence number less than or equal to the second sequence number.

Optionally, the transceiver module 1210 is further configured to send a handover response message to the first access network device, where the handover response message includes a first initial value of a first variable, and the first variable indicates an identifier value of a 1^{st} packet data convergence protocol PDCP service data unit SDU that is in a receive window and that is not delivered to an upper layer.

Optionally, the transceiver module 1210 is further configured to: receive first information from the first access network device, where the first information is used to request a second initial value of the first variable, and the second initial value is greater than the first initial value; and send the second initial value to the first access network device.

Optionally, the transceiver module 1210 is further configured to: after the terminal accesses the second access network device, send a second initial value to the terminal, where the second initial value is greater than the first initial value.

Optionally, the transceiver module 1210 is further configured to: before the terminal accesses the second access network device, send a second initial value to the first access network device, where the second initial value is greater than the first initial value.

Optionally, the processing module 1220 is further configured to determine that a quantity of data packets of the MBS that are sent by the second access network device is greater than a preset value.

For example, the transceiver module 1210 is further configured to: receive a third handover request message from a first access network device, where the third handover request message is used to request to hand over a first terminal to the second access network device; send a handover response message to the first access network device, where the handover response message includes a first initial value of a first variable, and the first variable indicates an identifier value of a 1^{st} PDCP SDU that is in a receive window and that is not delivered to an upper layer; and send a second initial value of the first variable to the first terminal.

For more detailed descriptions of the transceiver module 1210 and the processing module 1220, directly refer to related descriptions of the embodiments shown in FIG. 7 to FIG. 11A and FIG. 11B. Details are not described herein again.

It should be noted that the apparatus 1200 may include a sending module but does not include a receiving module. Alternatively, the apparatus 1200 may include a receiving module but does not include a sending module. This may specifically depend on whether the foregoing solution performed by the apparatus 1200 includes a sending action and a receiving action. It may be understood that because the apparatus 1200 has a communication function, the apparatus may also be referred to as a communication apparatus.

FIG. 13 is another block diagram of an apparatus according to an embodiment of this application. As shown in FIG. 13, the apparatus 1300 includes one or more processors 1310. The processor 1310 may be a general-purpose processor, a dedicated processor, or the like. For example, the processor may be a baseband processor or a central processing unit. The baseband processor may be configured to process a communication protocol and communication data. The central processing unit may be configured to: control an apparatus (for example, a first access network device, a second access network device, or a chip), execute a software program, and process data of the software program.

Optionally, in a design, the processor 1310 may include a program (which may also be referred to as code or instructions sometimes), and the program may be run on the processor 1310, to enable the apparatus 1300 to perform the method performed by the first access network device or the second access network device in the foregoing method embodiments. In another possible design, the apparatus 1300 includes a circuit (not shown in FIG. 13), and the circuit is configured to implement functions of the first access network device or the second access network device in the foregoing method embodiments.

For example, the processor 1310 may be configured to execute a computer program or instructions in a memory, to implement steps performed by the first access network device or the second access network device in the method embodiment shown in any one of the embodiments shown in FIG. 7 to FIG. 11A and FIG. 11B.

Optionally, the apparatus 1300 may include one or more memories 1320 that store a program (which may also be referred to as code or instructions sometimes), and the program may be run on the processor 1310, to enable the apparatus 1300 to perform the method performed by the first access network device or the second access network device in the foregoing embodiments.

Optionally, the processor 1310 and/or the memory 1320 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 1310 and/or the memory 1320 may further store data. The processor and the memory may be separately disposed, or may be integrated together.

Optionally, the apparatus 1300 may further include a communication interface 1330. The processor 1310 may also be referred to as a processing unit sometimes, and controls an apparatus (for example, a first access network device or a second access network device). The communication interface 1330 sometimes may also be referred to as a transceiver unit, a transceiver machine, a transceiver circuit, a transceiver, or the like, and is configured to implement a transceiver function of the apparatus.

Optionally, the apparatus 1300 further includes the communication interface 1330. The processor 1310 and the communication interface 1330 are coupled to each other. It may be understood that the communication interface 1330 may be a transceiver or an input/output interface.

It may be understood that because the apparatus 1300 has a communication function, the apparatus may also be referred to as a communication apparatus.

When the apparatus 1300 is configured to implement the method in FIG. 7 to FIG. 11A and FIG. 11B, the processor 1310 is configured to perform functions of the foregoing processing unit, and the communication interface 1330 is configured to perform functions of the foregoing transceiver module. Whether the communication interface 1330 is used for sending or receiving may specifically depend on whether the apparatus 1300 is configured to perform a sending action or a receiving action in a solution performed by the apparatus.

When the apparatus 1300 is a chip used in a first access network device, the chip implements functions of the first access network device in the foregoing method embodiments. The chip of the first access network device receives a signal from another module (for example, a radio frequency module or an antenna) in the first access network device, where the signal may be sent by a second access network device to the first access network device. Alternatively, the chip of the first access network device sends a signal to another module (for example, a radio frequency module or an antenna) in the first access network device, where the signal may be sent by the first access network device to a second access network device.

When the apparatus 1300 is a chip used in a second access network device, the chip implements functions of the second access network device in the foregoing method embodiments. The chip of the second access network device receives a signal from another module (for example, a radio frequency module or an antenna) in the second access network device, where the signal may be sent by a first access network device to the second access network device. Alternatively, the chip of the second access network device sends a signal to another module (for example, a radio frequency module or an antenna) in the second access network device, where the signal may be sent by the second access network device to a first access network device.

It may be understood that when the apparatus 1300 is a first access network device or a second access network device, the communication interface 1330 may be a transceiver, and may specifically include a transmitter and a receiver. The transmitter is configured to send a signal, and the receiver is configured to receive a signal. When the apparatus 1300 is a chip used in a first access network device or a second access network device, the communication interface 1330 may be an input/output circuit. The input circuit may be used for receiving, and the output interface may be used for sending.

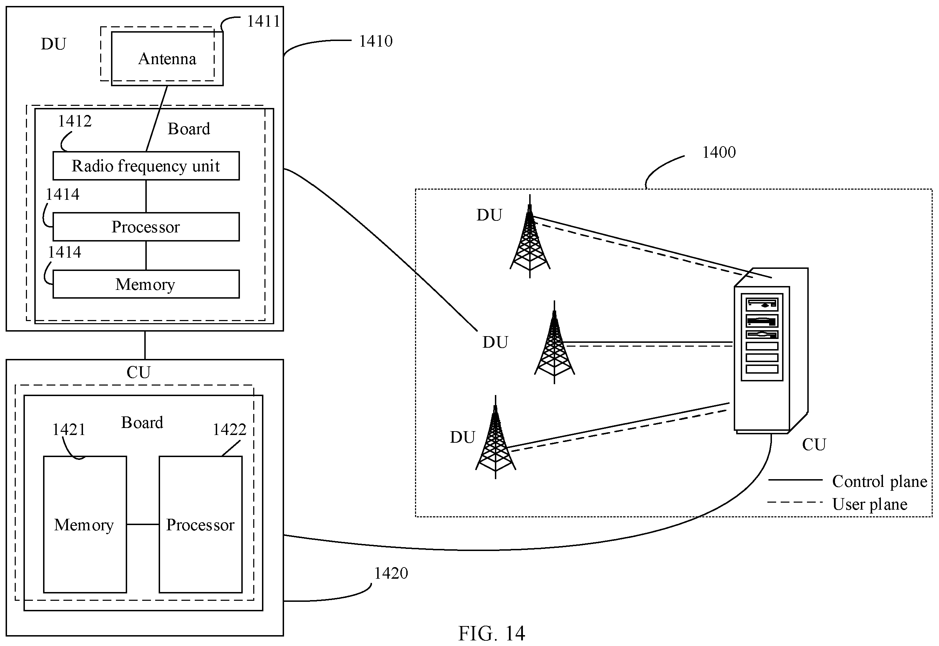

FIG. 14 is a diagram of a structure of a radio access network device according to an embodiment of this application, for example, may be a diagram of a structure of a base station. The base station 1400 may be used in the system shown in FIG. 1, and performs functions of the second access network device in the foregoing method embodiments. As shown in the figure, the base station 1400 may include one or more of the following: one or more (DU+RU)s 1410 and one or more CUs 1420. The CU 1420 may communicate with a next generation core network (next generation core, NG core). The DU may include at least one antenna 1411, at least one radio frequency unit 1412, at least one processor 1414, and at least one memory 1414. The DU part is mainly configured to: send and receive radio frequency signals, perform conversion between a radio frequency signal and a baseband signal, and perform partial baseband processing. The CU 1420 may include at least one processor 1422 and at least one memory 1421. The CU 1420 and the DU may communicate with each other through an interface. A control plane (control plane, CP) interface may be an Fs-C, for example, an F1-C. A user plane (user plane, UP) interface may be an Fs-U, for example, an F1-U. The DU and the RU may cooperate to jointly implement functions of a physical (physical, PHY) layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 1420 is mainly configured to: perform baseband processing, control a base station, and the like. The DU and the CU 1420 may be physically disposed together, or may be physically separated, namely, a distributed base station. The CU 1420 is a control center of the base station, may correspond to the processing module in FIG. 12 or the processor in FIG. 13, may also be referred to as a processing unit, and is mainly configured to complete a baseband processing function. For example, the CU 1420 may be configured to control the base station to perform the operation procedure related to the access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of a protocol layer, for example, an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 1400 may include one or more radio units (RUs), one or more DUs, and one or more CUs. The DU may include at least one processor 1414 and at least one memory 1413, the RU may include at least one antenna 1411 and at least one radio frequency unit 1412, and the CU may include at least one processor 1422 and at least one memory 1421.

In an example, the CU 1420 may include one or more boards, and a plurality of boards may jointly support a radio access network (for example, a 5G network) of a single access standard, or may separately support radio access networks (for example, an LTE network, a 5G network, or another network) of different access standards. The memory 1421 and the processor 1422 may serve the one or more boards. In other words, a memory and a processor may be disposed on each board. Alternatively, a plurality of boards may share a same memory and a same processor. In addition, a necessary circuit may be further disposed on each board. The DU may include one or more boards, and a plurality of boards may jointly support a radio access network (for example, a 5G network) of a single access standard, or may separately support radio access networks (for example, an LTE network, a 5G network, or another network) of different access standards. The memory 1413 and the processor 1414 may serve the one or more boards. In other words, a memory and a processor may be disposed on each board. Alternatively, a plurality of boards may share a same memory and a same processor. In addition, a necessary circuit may be further disposed on each board.

It should be understood that, the base station 1400 shown in FIG. 14 can implement processes related to the first access network device or the second access network device in the method embodiments shown in FIG. 7 to FIG. 11A and FIG. 11B. Operations and/or functions of modules in the base station 1400 are separately intended to implement corresponding procedures in the foregoing method embodiments. For details, refer to the descriptions of the foregoing method embodiments. To avoid repetition, detailed descriptions are properly omitted herein.

It should be understood that, the base station 1400 shown in FIG. 14 is merely a possible architecture of the radio access network device, and shall not constitute any limitation on this application. The method provided in this application is applicable to a network device of another architecture, for example, a radio access network device including a CU, a DU, and an AAU. A specific architecture of the radio access network device is not limited in this application.

It should be understood that, FIG. 14 is merely an example rather than a limitation, and the radio access network device may not depend on the structure shown in FIG. 14. For example, the radio access network device may also include an AAU, and may further include a CU and/or a DU; or the radio access network device may also include a BBU, and may further include an adaptive radio unit (adaptive radio unit, ARU). This is not limited in this application.

The CU and/or the DU may be configured to perform an action that is implemented inside the radio access network device and that is described in the foregoing method embodiments. The AAU may be configured to perform an action that is of the radio access network device performing sending to the terminal or performing receiving from the terminal and that is described in the foregoing method embodiments. For details, refer to the descriptions of the foregoing method embodiments. Details are not described herein again.

It should be noted that, the foregoing method embodiments may be applied to a processor, or implemented by a processor. The processor may be an integrated circuit chip, and has a signal processing capability. In an implementation process, steps in the foregoing method embodiments may be implemented by using a hardware integrated logic circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the foregoing method in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these memories and any memory of another proper type.

The entirety or a part of the method provided in the foregoing embodiments may be implemented by software, hardware, firmware, or any combination thereof. When software is used to implement the method, the entirety or a part of the method may be implemented in a form of computer program product. The computer program product may include one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state disk (solid-state disk, SSD)), or the like.

This application further provides a computer-readable medium storing a computer program. When the computer program is executed by a computer, a function in the foregoing method embodiments is implemented.

This application further provides a computer program product including instructions. When the computer program product is executed by a computer, a function in the foregoing method embodiments is implemented.

A person of ordinary skill in the art may be aware that, units and algorithm steps in the examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A handover method, applied to a first access network device or a chip of the first access network device, wherein the method comprises:
sending a first handover request message to a second access network device, wherein the first handover request message is used to request to hand over a terminal from the first access network device to the second access network device, the first handover request message comprises a first sequence number, and the first sequence number is a sequence number of a last first data packet in at least one first data packet sent by the first access network device to the terminal;
sending at least one second data packet to the terminal; and
sending a second sequence number to the second access network device, wherein the second sequence number is a sequence number of a last second data packet in the at least one second data packet sent by the first access network device to the terminal, and the second sequence number is greater than the first sequence number; and
the at least one first data packet and the at least one second data packet belong to a same multicast and broadcast service MBS session.

2. The method according to claim 1, wherein the second sequence number is used by the second access network device to delete a buffered data packet of the MBS session.

3. The method according to claim 1 or 2, wherein before sending the first handover request to the second access network device, the method further comprises:
determining to perform conditional handover.

4. The method according to any one of claims 1 to 3, wherein after sending the first handover request message to the second access network device, the method further comprises:
receiving a handover response message from the second access network device, wherein the handover response message comprises a first initial value of a first variable, and the first variable indicates an identifier value of a 1^{st} packet data convergence protocol PDCP service data unit SDU that is in a receive window and that is not delivered to an upper layer; and
sending the first initial value of the first variable to the terminal.

5. The method according to claim 4, wherein the method further comprises:
receiving a second initial value from the second access network device, wherein the second initial value is greater than the first initial value; and
sending the second initial value to the terminal.

6. The method according to claim 4, wherein the method further comprises:
determining whether a quantity of the at least one second data packet is greater than a preset value;
when the quantity of the at least one second data packet is greater than the preset value, sending first information to the second access network device, wherein the first information is used to request a second initial value of the first variable, and the second initial value is greater than the first initial value;
receiving the second initial value from the second access network device; and
sending the second initial value to the terminal.

7. The method according to claim 6, wherein the preset value is a size of the receive window.

8. The method according to any one of claims 1 to 7, wherein the second sequence number is carried in a second handover request message, the second handover request message is used to request to hand over the terminal from the first access network device to the second access network device, and the second handover request message indicates the second access network device not to update a radio resource control RRC configuration.

9. The method according to any one of claims 1 to 7, wherein the second sequence number is carried in early status transfer signaling.

10. The method according to any one of claims 1 to 7, wherein the second sequence number is carried in MBS early status transfer signaling.

11. A handover method, applied to a second access network device or a chip of the second access network device, wherein the method comprises:
receiving a first handover request message from a first access network device, wherein the first handover request message is used to request to hand over a terminal from the first access network device to the second access network device, the first handover request message comprises a first sequence number, and the first sequence number is a sequence number of a last first data packet in at least one data packet sent by the first access network device to the terminal;
receiving a second sequence number from the first access network device, wherein the second sequence number is a sequence number of a last second data packet in at least one second data packet sent by the first access network device to the terminal, the second sequence number is greater than the first sequence number, and the at least one first data packet and the at least one second data packet belong to a same multicast and broadcast service MBS session; and
deleting a data packet that is in buffered data packets of the MBS session and that is identified by a sequence number less than or equal to the second sequence number.

12. The method according to claim 11, wherein the first handover request is sent after the first access network device determines to perform conditional handover.

13. The method according to claim 11 or 12, wherein after receiving the first handover request message from the first access network device, the method further comprises:
sending a handover response message to the first access network device, wherein the handover response message comprises a first initial value of a first variable, and the first variable indicates an identifier value of a 1^{st} packet data convergence protocol PDCP service data unit SDU that is in a receive window and that is not delivered to an upper layer.

14. The method according to claim 13, wherein the method further comprises:
receiving first information from the first access network device, wherein the first information is used to request a second initial value of the first variable, and the second initial value is greater than the first initial value; and
sending the second initial value to the first access network device.

15. The method according to claim 13, wherein the method further comprises:
after the terminal accesses the second access network device, sending a second initial value to the terminal, wherein the second initial value is greater than the first initial value.

16. The method according to claim 13, wherein the method further comprises:
before the terminal accesses the second access network device, sending a second initial value to the first access network device, wherein the second initial value is greater than the first initial value.

17. The method according to claim 15 or 16, wherein the method further comprises:
determining that a quantity of data packets of the MBS session that are sent by the second access network device is greater than a preset value.

18. The method according to claim 17, wherein the preset value is a size of the receive window.

19. The method according to any one of claims 11 to 18, wherein the second sequence number is carried in a second handover request message, the second handover request message is used to request to hand over the terminal from the first access network device to the second access network device, and the second handover request message indicates the second access network device not to update a radio resource control RRC configuration.

20. The method according to any one of claims 11 to 18, wherein the second sequence number is carried in early status transfer signaling.

21. The method according to any one of claims 11 to 18, wherein the second sequence number is carried in MBS early status transfer signaling.

22. A communication apparatus, comprising a module configured to implement the method according to any one of claims 1 to 21.

23. A communication apparatus, comprising a processor, configured to execute a computer program and/or use a logic circuit, to enable the communication apparatus to implement the method according to any one of claims 1 to 21.

24. The apparatus according to claim 23, further comprising a memory, configured to store a computer program and/or a configuration file of the logic circuit.

25. The apparatus according to claim 23 or 24, further comprising a communication interface, configured to input and/or output a signal.

26. A computer-readable storage medium, wherein the computer-readable storage medium stores a computer program, and when the computer program is executed by a processor, the method according to any one of claims 1 to 10 is performed, or the method according to any one of claims 11 to 21 is performed.

27. A computer program product, comprising a computer program, wherein when the computer program is run, the method according to any one of claims 1 to 10 is performed, or the method according to any one of claims 11 to 21 is performed.

28. A communication system, comprising a first access network device and a second access network device, wherein the first access network device is configured to implement the method according to any one of claims 1 to 10, and the second access network device is configured to implement the method according to any one of claims 11 to 21.
